# EUROPEAN PATENT APPLICATION

(11) **EP 3 333 602 A1**
(43) Date of publication of application: **13.06.2018**
(21) Application number: 16842048.7
(22) Date of filing: 01.09.2016
(51) Int. Cl.: G02B 5/23

(54) **PRIMER COMPOSITION AND PHOTOCHROMIC LAYERED BODY**

(30) Priority: 03.09.2015 JP 2015174183; 03.09.2015 JP 2015174221
(71) Applicant: Tokuyama Corporation, Shunan-shi, Yamaguchi 745-0053 (JP)
(72) Inventor: YAMAMOTO, Hiromasa, Shunan-shi Yamaguchi 745-0053 (JP); MOMODA, Junji, Shunan-shi Yamaguchi 745-0053 (JP); IZUMI, Shinobu, Shunan-shi Yamaguchi 745-0053 (JP)
(74) Representative: Beckmann, Claus
(86) International application number: PCT/JP2016/076359
(87) International publication number: WO 2017/039019

(57) **Abstract**

To provide a primer composition for optical articles which comprises (A) a polyrotaxane and (B) a resin and/or precursor thereof. This primer composition for optical articles can suppress the production of a crack in a photochromic coat layer, form a laminate structure that the photochromic coat layer is hardly scratched, and provide a primer coat layer which exhibits excellent adhesion and photochromic properties on an optical substrate.

## Description

### TECHNICAL FIELD

The present invention relates to a novel primer composition for optical articles and a photochromic laminate including a cured layer of the primer composition for optical articles. More specifically, it relates to a primer composition for optical articles which suppresses the production of a crack in a photochromic coat layer at the time of producing a photochromic laminate, forms a laminate structure that the photochromic coat layer is hardly scratched and can provide a primer coat layer having excellent adhesion and photochromic properties as well as a photochromic laminate including a cured layer of the primer coat layer.

### BACKGROUND ART

Photochromic eyeglasses function as sunglasses whose lenses are quickly colored outdoors where they are irradiated with light including ultraviolet light such as sunlight and as ordinary transparent eyeglasses whose lenses are faded indoors where there is no irradiation, and demand for the photochromic eyeglasses is growing nowadays.

As for photochromic spectacle lenses, plastic lenses provided with photochromic performance are widely used from the viewpoints of lightweight and safety. As the method of producing a plastic lens having photochromic properties, there are known a method in which the surface of a lens having no photochromic properties is impregnated with a photochromic compound (to be referred to as "impregnation method" hereinafter), a method in which a coating agent comprising a curable composition having photochromic properties (may also be referred to as "photochromic curable composition" hereinafter) is applied to the surface of a plastic lens and cured to form a resin layer having photochromic properties (may also be referred to as "photochromic coat layer" hereinafter) (to be referred to as "coating method" hereinafter), and a method in which a photochromic compound is dissolved in a monomer and the monomer is polymerized to obtain a photochromic lens directly (to be referred to as "kneading method" hereinafter). Out of these, the coating method is excellent as it can provide photochromic performance regardless of the material of a plastic lens.

To use a photochromic lens (may also be referred to as "photochromic laminate" hereinafter) manufactured by the coating method for a long time, the photochromic coat layer must be bonded to the surfaces of various plastic lens substrates. Also, the scratching of the photochromic coat layer must be prevented, and it is important that the photochromic coat layer should have sufficiently high surface hardness. Further, it is also important that the scratching of the surface of even an article having a hard coat layer and an antireflection film on a photochromic coat layer should be prevented, and therefore it is important that the photochromic laminate should have sufficiently high surface hardness to this end.

To prevent the scratching of the photochromic laminate, various improvements have been made until now. For example, there is known a method in which a radically polymerizable monomer having a silanol group or a group producing a silanol group by hydrolysis and an amine compound are added to a photochromic curable composition to improve adhesion to a plastic lens substrate (refer to WO2003/011967). Also, there is known a method in which a polyurethane composed of a moisture-curable polyurethane cured body is used as a primer coat layer and a photochromic coat layer is formed on the layer (refer to JP-A 2005-199683). Further, there is known a method in which a primer composition composed of an emulsion containing a polyurethane is used for a primer coat layer and a photochremic coat layer is formed on the layer (refer to WO2008/001875).

### DISCLOSURE OF THE INVENTION

However, in the above prior art methods, there is room for improvement in the following points. That is, it was found that the method of WO2003/001967 which is a method for improving adhesion to a plastic lens substrate by adding the compound having a bond group to the surface of a plastic lens to the photochromic curable composition has a problem that, though the photochromic laminate has initial adhesion, when it is used repeatedly at a high temperature and a high humidity, the adhesion of the photochromic coat layer deteriorates according to the type of the substrate, with the result of peeling.

In the method of JP-A 2005-199683 in which the moisture-curable polyurethane is used, the photochromic laminate endures repeated use at a high temperature and a high humidity and the surface hardness of the photochromic coat layer was satisfactory. However, since the surface of the substrate is eroded by the primer composition according to the type of the plastic lens substrate, the surface of the substrate must be covered with a crosslinked film such as a hard coat layer before the primer composition is applied. It was also found that when a cured body having high surface hardness is used as the photochromic coat layer, a crack (a crack appearance defect) may be produced at the time of forming the photochromic coat layer after the primer coat layer is formed.

Meanwhile, in the method of WO2008/001875 in which the emulsion containing a polyurethane is used as a primer, wettability to the primer coat layer and the photochromic coat layer, adhesion between the photochromic coat layer and the plastic lens and photochromic properties were satisfactory. However, it was revealed that the photochromic coat layer was easily scratched due to unsatisfactory surface hardness.

Among the above photochromic laminates of the prior art, there is no photochromic laminate which does not crack at the time of production and has a photochromic coat layer having such high surface hardness that it is hardly scratched while it retains high photochromic properties and therefore, the development of a photochromic laminate which satisfies the requirements for the above properties has been desired.

It is therefore an object of the present invention to provide a photochromic laminate which suppresses the production of a crack in a photochromic coat layer at the time of producing the photochromic laminate, is excellent in photochromic properties and has a hardly scratched photochromic coat layer.

The inventors of the present invention conducted intensive studies to attain the above object. They thought that the mitigation of film strain caused by polymerization shrinkage stress at the time of polymerization in the step of forming a photochromic coat layer appears as a crack in a laminate film at the time of polymerization and heating and that it is effective for the prevention of a crack in the photochromic laminate to provide flexibility to the photochromic coat layer. When flexibility was provided to the photochromic coat layer, they found that the surface hardness of the photochromic coat layer lowers, whereby the photochromic laminate was scratched. When they conducted further studies on the photochromic coat layer in more detail, they found that when the suppression of an appearance defect such as a crack and the improvement of surface hardness are to be obtained, photochromic properties deteriorate and it is difficult to obtain a photochromic coat layer which satisfies both of the above requirements.

Then, they thought that it is effective to provide flexibility to a primer coat layer underlying the photochromic coat layer or a primer coat layer between the photochromic coat layer and a hard coat layer and studied about a primer composition for forming the primer coat layer. They found that when a primer composition comprising a polyrotaxane is used to form a primer coat layer so as to produce a photochromic laminate, the photochromic coat layer has high surface hardness and the cracking of the photochromic coat layer and the scratching of the hard coat layer are prevented while excellent adhesion between the photochromic coat layer and the plastic lens and photochromic properties are retained. The present invention was accomplished based on this finding.

That is, according to the present invention, there is provided a primer composition for optical articles which comprises (A) a polyrotaxane, (B) a resin and/or precursor thereof and substantially no photochromic compound.

In the present invention, the above polyrotaxane is a molecular complex having a structure that a chain axial molecule pass through the inside of each of the rings of a plurality of cyclic molecules, a bulky group is bonded to both ends of the axial molecule, and the cyclic molecules cannot be removed from the axial molecule due to steric hindrance.

The primer composition for optical articles of the present invention can advantageously take the following mode.
(1) The resin and/or a precursor thereof (B) is a polyurethane and/or precursor thereof.
(2) The cyclic molecules of the polyrotaxane, have side chains and at least some of the side chains have a polymerizable functional group.

Further, according to the present invention, there is provided a photochromic laminate having a photochromic coat layer and a hard coat layer above an optical substrate in this order, wherein a primer coat lawyer which is a cured body of the above primer coat composition for optical articles is formed between the optical substrate and the photochromic coat layer and/or between the photochromic coat layer and the hard coat layer.

### BRIEF DESCRIPTION OF THE DRAWINGS

Fig. 1 is a schematic diagram showing the molecular structure of a polyrotaxane used in the present invention.
Fig. 2 is a schematic diagram showing the laminate structure of the photochromic laminate of the present invention.
Fig. 3 is a schematic diagram showing another laminate structure of the photochromic laminate of the present invention.
Fig. 4 is a schematic diagram showing still another laminate structure of the photochromic laminate of the present invention.

### MODE FOR CARRYING OUT THE INVENTION

### <primer composition for optical articles>

The primer composition for optical articles of the present invention (may also be simply referred to as "primer composition" hereinafter) comprises a polyrotaxane. A cured body formed from the primer composition of the present invention is used as a primer coat layer formed between the optical substrate and a layer containing a photochromic compound (photochromic coat layer) and/or between the layer containing a photochromic compound (photochromic coat layer) and a hard coat layer, thereby making it possible to ensure adhesion between the primer coat layer and the photochromic coat layer in contact with the primer layer and adhesion between the primer coat layer and the hard coat layer in contact with the primer coat layer and prevent the cracking of the photochromic coat layer as will be described hereinafter. The primer coat layer has the effect of increasing the surface hardness of the photochromic coat layer and/or the hard coat layer and the effect of suppressing the deterioration of the photochromic compound.

Thus, the inventors of the present invention consider the reason that the primer coat layer formed from the primer composition of the present invention has the above effects as follows though its details are unknown. Since the cyclic molecules of the polyrotaxane can freely move over the axial molecule, it seems that stress produced in the photochromic coat layer is mitigated by a polyrotaxane molecule contained in the primer coat layer. Particularly when the cyclic molecules have a polymerizable functional group, the polyrotaxane and another constituent component can be crosslinked with the polymerizable functional groups as starting points, thereby making it possible to form a supramolecular network in which crosslinked points freely move. At this point, it seems that the crosslinked points serve like pulleys (pulley effect) to enhance the effect of mitigating stress produced in the photochromic coat layer.

The primer composition of the present invention may comprise (C) water and/or an organic solvent, (D) a polymerization curing accelerator, (E) a hydrolyzable group-containing organic silicon compound, (F) inorganic oxide fine particles and (G) other components as required in addition to (A) a polyrotaxane and (B) a resin and/or precursor thereof. Each of the components of the primer composition for optical articles of the present invention will be described hereinbelow.

### <(A) polyrotaxane>

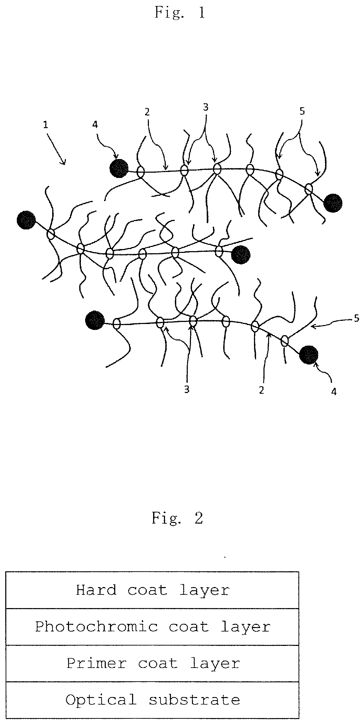

The polyrotaxane (A) is a known compound having a composite molecular structure consisting of an axial molecule and a plurality of cyclic molecules clathrating the axial molecule. The structure is schematically shown in Fig. 1. The polyrotaxane molecule represented by "1" as a whole has a composite molecular structure formed by a chain axial molecule "2" and cyclic molecules "3". That is, a plurality of the cyclic molecules "3" clathrate the chain axial molecule "2", and the axial molecule "2" passes through the inside of each of the rings of the cyclic molecules "3". Therefore, the cyclic molecules "3" can freely slide over the axial molecule "2" but a bulky terminal group "4" is formed at both ends of the axial molecule "2" to prevent the cyclic molecules "3" from falling off from the axial molecule "2". "5" denotes the side chains of the cyclic molecules "3". (This component may be simply referred to as "component (A)".)

In the above polyrotaxane, various axial molecules are known. For example, the chain part may be linear or branched as long as the axial molecule can pass through the rings of the cyclic molecules and is generally formed from a polymer.

Examples of the polymer forming the chain part of the axial molecule include polyvinyl alcohol, polyvinyl pyrrolidone, cellulose-based resins (such as carboxymethyl cellulose, hydroxyethyl cellulose and hydroxypropyl cellulose), polyacrylamide, polyethylene oxide, polyether-based resins (such as polyethylene glycol, polypropylene glycol and polytetrahydrofuran), polyvinyl acetal, polyvinyl methyl ether, polyamine, polyethylene imine, polyacrylonitrile, polyoxazoline, casein, gelatin, starch, olefin-based resins (such as polyethylene, polypropylene, polyisoprene and polybutadiene), polyester-based resins (such as polyethylene terephthalate, poly-ε-caprolactone and polyα-acetyl-γ-butyrolactone), polyvinyl chloride, styrene-based resins (such as polystyrene and acrylonitrile-styrene copolymer resin), acrylic resins (such as poly(meth)acrylic acid, polymethyl (meth)acrylate, polycyano (meth)acrylate, polyhydroxyethyl (meth)acrylate and acrylonitrile-methyl acrylate copolymer resin), polycarbonate, polyurethane, vinyl chloride-vinyl acetate copolymer resin, polyvinyl butyral, polyisobutylene, polyaniline, acrylonitrile-butadiene-styrene copolymer (ABS resin), polyamides (such as nylon), polyimide, polysiloxane-based resins (such as polydimethylsiloxane, polydiphenylsiloxane and polyphenylvinylsiloxane), polycarbonate resins (such as polyethylene carbonate and polypropylene carbonate), polysulfone, polyimine, polyacetic anhydride, polyurea, polysulfide, polyphosphazene, polyketone polyphenylene and polyhalo olefins. These polymers may be random copolymers or block copolymers, or modified. These polymers may have a polymerizable and/or nonpolymerizable substituent.

In the present invention, out of these, the polymer forming the chain part is preferably polyethylene glycol, polyisoprene, polyisobutylene, polybutadiene, polypropylene glycol, polytetrahydrofuran, polydimethylsiloxane, polyethylene, polypropylene, polyvinyl alcohol or polyvinyl methyl ether, particularly preferably polyethylene glycol.

Further, although the bulky group formed at both ends of the chain part is not particularly limited if it is a group which prevents the desorption of the cyclic molecules from the axial molecule, from the viewpoint of bulkiness, the bulky group is selected from adamantyl group, trityl group, fluoresceinyl group, dinitrophenyl group and pyrenyl group, out of which adamantyl group is preferred from the viewpoint of introduction ease.

Although the molecular weight of the above-described axial molecule is not particularly limited, when it is too high, its compatibility with other components lowers and when it is too low, the mobility of the cycle molecules tends to become low, whereby the flexibility of the primer coat layer obtained from the primer composition of the present invention tends to deteriorate. From this point of view, the weight average molecular weight Mw of the axial molecule is preferably 1,000 to 100,000, more preferably 5,000 to 80,000, particularly preferably 10,000 to 50,000.

Each of the cyclic molecules should have a ring large enough to clathrate the above axial molecule. Examples of this ring include cyclodextrin ring, crown ether ring, benzo-crown ring, dibenzo-crown ring and dicyclohexano-crown ring, out of which cyclodextrin ring is particularly preferred.

The cyclodextrin ring has α-form (ring inner diameter of 0.45 to 0.6 nm), β-form (ring inner diameter of 0.6 to 0.8 nm) or γ-form (ring inner diameter of 0.8 to 0.95 nm). In the present invention, α-cyclodextrin ring and γ-cyclodextrin ring are preferred, and α-cyclodextrin ring is most preferred.

A plurality of the cyclic molecules having the above ring clathrate one axial molecule. In general, when the maximum number of cyclic molecules capable of clathrating one axial molecule is 1, the number of clathrating cyclic molecules is preferably 0.001 to 0.6. When the number of clathrating cyclic molecules is too large, the cyclic molecules are densely existent for one axial molecule, whereby the mobility of the cyclic molecules becomes low and the flexibility of the primer coat layer obtained from the primer composition of the present invention tends to deteriorate. When the number of clathrating cyclic molecules is too small, the pulley effect of the polyrotaxane becomes small, whereby stress mitigation ability tends to become small.

The maximum number of cyclic molecules clathrating one axial molecule can be calculated from the length of the axial molecule and the thickness of each of the rings of the cyclic molecules.

For example, when the chain part of the axial molecule is formed from polyethylene glycol and the ring of the cyclic molecules is an α-cyclodextrin ring, the maximum number of clathrating cyclic molecules is calculated as follows.

Two recurring units [-CH₂-CH₂O-] of polyethylene glycol approximate the thickness of one α-cyclodextrin ring. Therefore, the number of the recurring units is calculated from the molecular weight of polyethylene glycol to obtain 1/2 of the number of the recurring units as the maximum number of clathrating cyclic molecules. Based on the condition that the maximum number of clathrating cyclic molecules is 1.0, the number of clathrating cyclic molecules is adjusted to the above range.

Further, in the present invention, side chains may be introduced into the ring of the above-described cyclic molecule. The side chains are represented by "5" in Fig.1. By introducing the side chains "5" into the ring, a supramolecular network in which the side chains and the crosslinked points can freely move can be formed. This is the basic structure of the polyrotaxane as a sliding material, and the crosslinked points serve like pulleys (pulley effect) to mitigate film stress, thereby making it possible to improve a crack preventing effect.

The above side chains are preferably formed from repetitions of an organic chain having 3 to 20 carbon atoms and have an average weight molecular weight of 300 to 10, 000.

Further, the above side chains are introduced by modifying the functional groups of the ring of the cyclic molecule. For example, the α-cyclodextrin ring has 18 hydroxyl groups as the functional groups through which the side chains are introduced. That is, a maximum of 18 side chains can be introduced into one α-cyclodextrin ring. In the present invention, to fully obtain the function of the above-described side chains, not less than 6%, particularly not less than 30 of the total number of all the functional groups of the ring are preferably modified to have the side chain. When the side chain is bonded to 9 out of the 18 hydroxy groups of the above α-cyclodextrin ring, the degree of modification is 50 %.

In the present invention, the above side chain (organic chain) may be linear or branched as long as its size falls within the above range. A side chain having an appropriate size can be introduced by reacting a suitable compound with the functional groups of the above ring by making use of ring-opening polymerization, radical polymerization, cationic polymerization, anionic polymerization or living radical polymerization such as atom transfer radical polymerization, RAFT polymerization or NMP polymerization.

For example, a side chain derived from a cyclic compound such as a cyclic lactone, cyclic ether, cyclic acetal, cyclic amine, cyclic carbonate, cyclic iminoether or cyclic thiocarbonate can be introduced by ring-opening polymerization. From the viewpoints of acquisition ease, high reactivity and easy control of size (molecular weight), a cyclic ether, cyclic siloxane, lactone or cyclic carbonate is preferably used. Preferred examples of the cyclic compound are given below.

For example, a side chain derived from a cyclic compound such as a cyclic lactone, cyclic ether, cyclic acetal, cyclic amine, cyclic carbonate, cyclic iminoether or cyclic thiocarbonate can be introduced by ring-opening polymerization. From the viewpoints of acquisition ease, high reactivity and easy control of size (molecular weight), a cyclic ether, cyclic siloxane, cyclic lactone or cyclic carbonate is preferably used. Preferred examples of the cyclic compound are given below.

Cyclic ethers; ethylene oxide, 1,2-propylene oxide, epichlorohydrin, epibromohydrin, 1,2-butylene oxide, 2,3-butylene oxide, isobutylene oxide, oxetane, 3-methyloxetane, 3,3-dimethyloxetane, tetrahydrofuran, 2-methyl tetrahydrofuran and 3-methyl tetrahydrofuran
Cyclic siloxanes; hexamethyl cyclotrisiloxane and octamethyl cyclotetrasiloxane
Cyclic lactones;
4-membered cyclic lactones; β-propiolactone, β-methyl propiolactone and L-serine-β-lactone
5-membered cyclic lactones; γ-butyrolactone, γ-hexanolactone, γ-heptanolactone, γ-octanolactone, γ-decanolactone, γ-dodecanolactone, α-hexyl-γ-butyrolactone, α-heptyl-γ-butyrolactone, α-hydroxy-γ-butyrolactone, γ-methyl-γ-decanolactone, α-methylene-γ-butyrolactone, α,α-dimethyl-γ-butyrolactone, D-erythronolactone, α-methyl-γ-butyrolactone, γ-nonanolactone, DL-pantolactone, γ-phenyl-γ-butyrolactone, γ-undecanolactone, γ-valerolactone, 2,2-pentamethylene-1,3-dioxolan-4-one, α-bromo-γ-butyrolactone, γ-crotonolactone, α-methylene-γ-butyrolactone, α-methacryloyloxy-γ-butyrolactone and β-methacryloyloxy-γ-butyrolactone
6-membered cyclic lactones; δ-valerolactone, δ-hexanolactone, δ-octanolactone, δ-nonanolactone, δ-decanolactone, δ-undecanolactone, δ-dodecanolactone, δ-tridecanolactone, δ-tetradecanolactone, DL-mevalonolactone, 4-hydroxy-1-cyclohexane carboxylic acid δ-lactone, monomethyl-δ-valerolactone, monoethyl-δ-valerolactone, monohexyl-δ-valerolactone, 1,4-dioxan-2-one and 1,5-dioxepan-2-one
7-membered cyclic lactones; non-alkyl-ε-caprolactone, dialkyl-ε-caprolactone, monomethyl-ε-caprolactone monoethyl-ε-caprolactone, monohexyl-ε-caprolactone, dimethyl-ε-caprolactone, di-n-propyl-ε-caprolactone di-n-hexyl-ε-caprolactone, trimethyl-ε-caprolactone triethyl-E-caprolactone, tri-n-ε-caprolactone, ε-caprolactone, 5-nonyl-oxepan-2-one, 4,4,6-trimethyl-oxepan-2-one, 4,6,6-trimethyl-oxepan-2-one and 5-hydroxymethyl-oxepan-2-one
8-membered cyclic lactones; ξ-enantholactone
other cyclic lactones; lactone, lactide, dilactide, tetramethyl glycoside, 1,5-dioxepan-2-one and t-butyl caprolactone
Cyclic carbonates; ethylene carbonate, propylene carbonate, 1,2-butylene carbonate, glycerol 1,2-carbonate, 4-(methoxymethyl)-1,3-dioxolan-2-one, (chloromethyl)ethylene carbonate, vinylene carbonate, 4,5-dimethyl-1,3-dioxol-2-one, 4-chloromethyl-5-methyl-1,3-dioxol-2-one, 4-vinyl-1,3-dioxolan-2-one, 4,5-diphenyl-1,3-dioxolan-2-one, 4,4-dimethyl-5-methylene-1,3-dioxolan-2-one, 1,3-dioxan-2-one, 5-methyl-5-propyl-1,3-dioxolan-2-one and 5,5-diethyl-1,3-dioxolan-2-one
The above cyclic compounds may be used alone or in combination.

In the present invention, cyclic lactones and cyclic carbonates are preferably used. Out of these, cyclic lactones such as ε-caprolactone, α-acetyl-γ-butyrolactone, α-methyl-γ-butyrolactone, γ-valerolactone and γ-butyrolactone are particularly preferred, and ε-caprolactone is most preferred.

In the present invention, by introducing a polymerizable functional group into the side chains of the above polyrotaxane, the strength of the primer coat layer can be improved due to the formation of a cross-link bond between the side chains of the polyrotaxane and a resin precursor (may also be referred to as "polymerizable monomer" hereinafter) in the resin and/or precursor thereof (B). As a result, the mechanical strength of the obtained photochromic laminate can be improved.

The site into which the polymerizable functional group of the polymerizable functional group-containing polyrotaxane is introduced may be either the end of the polymer of the side chain or the inside of the polymer chain of the side chain. It is easy in synthesis to introduce the polymerizable functional group by using a functional group at the end of the polymer of the side chain. As the functional group for introducing the polymerizable functional group, a group suitable for the introduction of the following polymerizable functional group is used.

Examples of the polymerizable functional group include radically polymerizable groups such as (meth) acrylic group, vinyl group and allyl group, and active hydrogen compounds such as epoxy group, hydroxyl group, thiol group, amino group (-NH₂), episulfide group, thi etanyl group, isocyanate group and thioisocyanate group.

For example, an epoxy group, episulfide group and thietanyl group react with an amino group or isocyanate group, and a hydroxyl group and thiol group react with an isocyanate group and thioisocyanate group to form a urethane bond and a thiourethane bond, respectively. The isocyanate group and the thioisocyanate group react with a hydroxyl group, thiol group or amino group.

In the present invention, the polyrotaxane (A) which is most preferably used includes polyethylene glycol bonded to an adamantyl group at both ends as the axial molecule and cyclic molecules having a α-cyclodextrin ring as the cyclic molecules. Side chains composed of polycaprolactone are introduced into the ring so that the cyclic molecules have the side chains with a hydroxyl group. Further, a group having a (meth) acrylic group may be introduced into the side chains of the ring.

Although the molecular weight of the above polyrotaxane is not particularly limited, when it is too high, its compatibility with other components tends to lower and when it is too low, the mobility of the cyclic molecules becomes low, whereby the flexibility of the primer coat layer formed from the primer composition of the present invention tends to deteriorate. From this point of view, the weight average molecular weight Mw of the above polyrotaxane is preferably 100,000 to 3,000,000.

The amount of the polyrotaxane (A) in the present invention is preferably 0.01 to 99 parts by mass, more preferably 0.1 to 90 parts by mass, much more preferably 0.5 to 70 parts by mass, particularly preferably 0.5 to 50 parts by mass based on 100 parts by mass of the total of the polyrotaxane (A) and the resin and/or precursor thereof (B) which will be described hereinafter from the viewpoints of adhesion and surface hardness.

### <(B) resin and/or precursor thereof>

In the primer composition of the present invention, the resin and/or precursor thereof (B) serve(s) to improve adhesion between the optical substrate and the photochromic coat layer, adhesion between the photochromic coat layer and the hard coat layer and mechanical strength when the primer composition is cured to form the primer coat layer. (This component may be simply referred to as "component (B)" hereinafter).

In the present invention, as the resin and/or precursor thereof (B) may be used a urethane-based material, radical polymerization-based material such as acryl, epoxy-based material or a mixture of two or more of these. As the urethane-based material, (B-1) a polyurethane and (B-2) a polyurethane precursor may be used, as the radical polymerization-based material, (B-3) a resin obtained by radical polymerization and/or a radically polymerizable monomer may be used, and as the epoxy-based material, (B-4) an epoxy polymerizable monomer may be used.

### (B-1) polyurethane

The above polyurethane can be obtained by reacting an active hydrogen group component and a poly(thio)isocyanate component by a one-shot method or a prepolymer method and has a urethane bond or urea bond in the molecular chain. For example, the urethane bond is formed by a reaction between a polyol and a polyisocyanate. This urethane bond includes a thiourethane bond formed by a reaction between a polyol and a polyisothiacyanate or a reaction between a polythiol and a polyisothiaisocyanate. The urea bond is formed by a reaction between a polyamine and a polyisocyanate. This urea bond includes a thiourea bond formed by a reaction between a polyamine and a polyisothiacyanate.

The polyurethane in the present invention is preferably obtained by using a component containing at least one selected from the group consisting of a polyol compound, polythiol compound, active hydrogen group-containing compound having an anionic group, active hydrogen group-containing acrylate compound and alkoxysilyl group-containing polyamine compound as a compound having active hydrogen.

The polyol compound which is preferably used as a raw material of the polyurethane in the present invention is a compound having two or more hydroxyl groups in one molecule. The following compounds are given as examples of the polyol compound.

Alkylene glycols such as ethylene glycol, 1,2-propylene glycol, 1,3-butanediol, 1,4-butanediol, 1,6-hexanediol, neopentyl glycol, dipropylene glycol and diethylene glycol; polyalkylene glycols such as polypropylene glycol, polyethylene glycol and polytetramethylene glycol; poly(alkylene adipates) such as poly(diethylene adipate), poly(tetramethylene adipate), poly(hexamethylene adipate) and poly(neopentylene adipate); polycaprolactone polyols such as poly-ε-caprolactone, polycaprolactone diol and polycaprolactone triol; polybutadiene glycols such as poly(1,4-butadiene)glycol and poly(1,2-butadiene)glycol; poly(alkylene carbonates) such as poly(hexamethylene carbonate) ; polyester polyols; polyols having three or more hydroxyl groups in one molecule such as trimethylolethane, trimethylolpropane, 1,2,4-butanetriol, 1,2,6-hexanetriol and pentaerythritol; and silicone polyols.

These polyol compounds may be used alone or in combination of two or more.

The polythiol compound which is preferably used as a raw material of the polyurethane in the present invention is a compound having two or more hydroxyl groups in one molecule. The following compounds are given as examples of the polythiol compound.

Trimethylolpropane tris(3-mercaptopropionate), pentaerythritol tetrakis(3-mercaptopropionate), dipentaerythritol hexakis(3-mercaptopropionate), tetraethylene glycol bis(3-mercaptopropionate), 1,4-butanediol bis(3-mercaptopropionate), 1,6-hexanediol bis(3-mercaptopropionate), 1,2-bis[(2-mercaptoethyl)thio]-3-mercaptopropane, 2,2-bis(mercaptomethyl)-1,4-butanedithiol, 1,4-bis(mercaptopropylthiomethyl)benzene, 2,5-bis(mercaptomethyl)-1,4-dithiane, 4-mercaptomethyl-1,8-dimercapto-3,6-dithiaoctane, 1,1,1,1-tetrakis(mercaptomethyl)methane, 1,1,3,3-tetrakis(mercaptomethylthio)propane, 1,1,2,2-tetrakis(mercaptomethylthio)ethane, 4,6-bis(mercaptomethylthio)-1,3-dithiane, 2-mercaptomethanol and tris-[(3-mercaptopropionyloxy)-ethyl]-isocyanurate.

These polythiol compounds may be used alone or in combination of two or more.

The active hydrogen group-containing compound having an anionic group which is preferably used as a raw material of the polyurethane in the present invention is, for example, an active hydrogen group-containing compound having a carboxyl group as the anionic group. Examples thereof include dihydroxycarboxylic acids such as 2,2-dimethylol acetic acid, 2,2-dimethylol lactic acid, 2,2-dimethylol propionic acid, 2,2-dimethylol butanoic acid, 2, 2-dimethylol butyric acid and 2, 2-dimethylol valeric acid; and diaminocarboxylic acids such as lysin and arginine.

The active hydrogen group-containing acrylate compound which is a raw material of the polyurethane is a (meth)acrylate compound having one or more hydroxyl groups in the molecule, and examples thereof include 2-hydroxyethyl (meth)acrylate, hydroxypropyl (meth)acrylate, hydroxybutyl (meth)acrylate, 2,2-dihydroxymethylbutyl (meth)acrylate, polyhydroxyalkyl maleate and polyhydroxyalkyl fumarate.

The alkoxysilyl group-containing polyamine compound which is preferably used as a raw material of the polyurethane in the present invention is, for example, an alkoxysilyl compound having a primary amino group and a secondary amino group. Examples thereof include N-β-(aminoethyl)-γ-aminopropylmethyl dimethoxysilane, N-β-(aminoethyl)-γ-aminopropyl trimethoxysilane, γ-(2-aminoethyl)aminopropyl triethoxysilane, γ-(2-aminoethyl)aminopropyl dimethoxysilane, γ-(2-aminoethyl)aminopropyl diethoxysilane, γ-aminopropyl trimethoxysilane, γ-aminopropyl triethoxysilane, γ-aminopropyl dimethoxysilane, γ-aminopropyl diethoxysilane and N,N'-bis[α-(trimethoxysilyl)propyl]ethylenediamine.

The polyisocyanate compound which is preferably used as a raw material of the polyurethane in the present invention is a compound having two or more isocyanate groups in one molecule.

Examples of the polyisocyanate compound include aliphatic diisocyanate compounds such as tetramethylene-1,4-diisocyanate, hexamethylene-1,6-diisocyanate, octamethylene-1,8-diisocyanate and 2,2,4-trimethylhexane-1,6-diisocyanate; alicyclic diisocyanate compounds such as cyclobutane-1,3-diisocyanate, cyclohexane-1,3-diisocyanate, cyclohexane-1,4-diisocyanate, 2,4-methylcyclohexyl diisocyanate, 2,6-methylcyclohexyl diisocyanate, isophorone diisocyanate, norbornene diisocyanate, isomer mixture of 4,4'-methylenebis(cyclohexyl isocyanate), hexahydrotoluene-2,4-diisocyanate, hexahydrotoluene-2,6-diisocyanate, hexahydrophenylene-1,3-diisocyanate, hexahydrophenylene-1,4-diisocyanate, 1,9-diisocyanato-5-methylnonane, 1,1-bis(isocyanatomethyl)cyclohexane, 2-isocyanato-4-[(4-isocyanatocyclohexyl)methyl]-1-methyl cyclohexane, 2-(3-isocyanatopropyl)cyclohexyl isocyanate and norbornane diisocyanate; aromatic diisocyanate compounds such as phenyl cyclohexylmethane diisocyanate, isomer mixture of 4,4'-methylenebis(phenylisocyanate), toluene-2,3-diisocyanate, toluene-2,4-diisocyanate, toluene-2,6-diisocyanate, phenylene-1,3-diisocyanate, phenylene-1,4-diisocyanate, 1,3-bis(isocyanatomethyl)benzene, xylylene diisocyanate, tetramethyl xylylene diisocyanate, naphthalene diisocyanate, diphenyl ether diisocyanate, 1,3-diisocyanatomethyl benzene, 4,4'-diisocyanato-3,3'-dimethoxy(1,1'-biphenyl), 4,4'-diisocyanato-3,3'-dimethylbiphenyl, 1,2-diisocyanatobenzene, 7.,4-bis(isocyanatomethyl)-2,3,5,6-tetrachlorobenzene, 2-dodecyl-1,3-diisocyanatobenzene, 1-isocyanato-4-[(2-isocyanatocyclohexyl)methyl]-2-methylbenzene, 1-isocyanato-3-[(4-isocyanatophenyl)methyl]-2-methylbenzene, 4-[(2-isocyanatophenyl)oxy]phenyl isocyanate and diphenylmethane diisocyanate; polymers of the above polyisocyanate compounds (such as dimers and trimers); biuret modified products formed by a reaction between a polymer of a polyisocyanate compound and water; and alphanate modified products and polyol modified products formed by a reaction between a polymer of a polyisocyanate compound and an alcohol or low-molecular weight polyol which will be described hereinafter.

Oxadiazine trione modified products formed by a reaction between a polymer of a polyisocyanate compound and a carbonic acid gas and polymers of these modified products may also be used as a raw material of the polyurethane in the present invention. Out of the above polyisocyanate compounds, aliphatic diisocyanate compounds and alicyclic diisocyanate compounds are preferably used from the viewpoint of weatherability. These polyisocyanate compounds may be used alone or in combination of two or more.

As the above polyisocyanate compound, a polyblock isocyanate compound whose one or more isocyanate groups are protected by a blocking agent may be used. The above polyblock isocyanate compound is a compound whose isocyanate group (s) (-NCO) is/are protected by a protective group able to be thermally desorbed.

To produce the above polyurethane, a chain extender may be used. As the chain extender, amines excluding the alkoxysilyl group-containing polyamine compounds, and hydrazines may be used. The above amines include diamines such as ethylenediamine, 1,3-propanediamine, 1,4-butanediamine, 1,6-hexamethylenediamine, 1,4-cyclohexanediamine, 3-isocyanatomethyl-3,5,5-trimethylcyclohexyl isocyanate(isophoronediamine), 4,4'-dicyclohexylmethanediamine, 2,5(2,6)-bis(aminomethyl)bicyclo[2.2.]heptane and 1,3-bis(aminomethyl)cyclohexane, and polyamines such as diethylene triamine, triethylene tetramine and tetraethylene pentamine.

The polyurethane in the present invention may be diluted with an organic solvent or dispersed in water. In the case of water dispersion, a water dispersion polyurethane may be prepared by emulsifying or dispersing the polyurethane in a solvent which is water or a mixture of an organic solvent having high affinity for water and water or by dispersing the polyurethane in a colloid. The above water dispersion polyurethane in the present invention is a compound having an anionic group to provide water dispersibility to a polyurethane skeleton. Examples of the anionic group include carboxyl group, sulfonyl group, phosphate group and betaine structure-containing group such as sulfobetaine.

To fully dissolve or disperse the water dispersion polyurethane, a neutralizer is preferably used. Examples of the above neutralizer include trialkylamines such as trimethylamine and triethylamine; N,N-dialkylalkanolamines such as N,N'-dimethylethanolamine; trialkanolamines such as triethanolamine; and sodium hydroxide, potassium hydroxide, lithium hydroxide, ammonia and trimethylammonium hydroxide.

Further, the dispersion of the water dispersion polyurethane may further contain an emulsifier to improve the wettability of the primer composition to the optical substrate. Examples of the emulsifier include nonionic emulsifiers, anionic emulsifiers, cationic emulsifiers and amphoteric emulsifiers.

This water dispersion polyurethane is available industrially or as a reagent, as exemplifier by the SUPERFLEX Series of Dai-ichi Kogyo Seiyaku Co., Ltd., the NJ-321A of Tokuyama Corporation, the TAKELAC WS Series of Mitsui Chemicals, Inc., and the EVAFANOL Series and NEOSTECKER Series of Nikka Chemical Co., Ltd.

In the present invention, a cured body of the water dispersion polyurethane is formed by applying a primer composition comprising the above water dispersion polyurethane and the polyrotaxane to the optical substrate, removing water and curing the composition.

### (B-2) polyurethane precursor

The polyurethane precursor in the present invention produces a polyurethane by curing. Examples of the polyurethane precursor include a compound having active hydrogen as described in (B-1), a polyiso(thio)cyanate compound, and a prepolymer obtained by reacting the compound having active hydrogen as described in (B-1) and a polyiso(thio)cyanate compound. As for the difference between (B-1) and (B-2), the polyurethane (B-1) is synthesized and then mixed with the polyrotaxane (A), or the polyurethane precursor (B-2) and the polyrotaxane (A) are mixed together. From the viewpoint of adhesion to the optical substrate, a composition prepared by mixing together the polyurethane precursor (B-2) and the polyrotaxane (A) is preferably used.

A polyurethane precursor which is designed to ensure that a polyiso(thio)cyanate compound is left behind as the compound having active hydrogen may be used as a moisture-curable polyurethane. The above moisture-curable polyurethane is designed to ensure that isocyanate groups remain in the polyurethane molecule. It is a compound which is crosslinked and cured by producing a urea bond after some of isocyanate groups existent in the molecule are reacted with, for example, water contained in the air to produce carbamic acid and then the compound is decarbonized to produce an amine which is reacted with the remaining isocyanate groups to produce the urea bond. The above moisture-curable polyurethane has a number average molecular weight of preferably 300 to 5,000, particularly preferably 500 to 3,000. Further, the above moisture-curable polyurethane is a polyurethane oligomer or polyurethane prepolymer which has an average content of isocyanate groups existent at terminals in one molecule of preferably 0.1 to 50 mass%, more preferably 0.5 to 30 mass%, particularly preferably 1 to 10 mass%. The isocyanate group content of the moisture-curable polyurethane can be determined by back titration with an amine. That is, it can be determined by reacting the isocyanate groups in the moisture-curable polyurethane with a known amount of the amine, determining the amount of the residual amine by acid titration and calculating the amount of the reacted amine.

The above moisture-curable polyurethane can be obtained by bonding the isocyanate compound and the compound having active hydrogen by using various ways in a charge ratio which ensures that isocyanate groups remain. Examples of the isocyanate compound which may be preferably used as a raw material of the moisture-curable polyurethane in the present invention include aromatic isocyanate compounds such as tolylene diisocyanate, 4,4-diphenylmethane diisocyanate, xylylene diisocyanate, 1,5-naphthalene diisocyanate, tolidine diisocyanate, triphenylmethane triisocyanate, tris(isocyanate phenyl) thiophosphate and tetramethylxylene diisocyanate; aliphatic isocyanate compounds such as trimethylhexamethylene diisocyanate, hexamethylene diisocyanate, isophorone diisocyanate, hydrogenated 4,4'-diphenylmethane diisocyanate, hydrogenated xylene diisocyanate, lysin diisocyanate, lysin ester triisocyanate, 1,6,11-undecane triisocyanate, 1,8-diisocyanate-4-isocyanatemethyl octane, 1,3,6-hexamethylene triisocyanate and bicycloheptane triisocyanate; and polyisocyanates containing one or more sulfur or halogen groups and modified products thereof. Examples of the modified products include biurets, isocyanurates, alphanates and carbodiimides. They may be used alone or in combination of two or more.

Out of the above isocyanate compounds, aliphatic isocyanate compounds may be preferably used since they can exhibit excellent adhesion at a relatively low temperature. Further, aromatic isocyanate compounds may be preferably used since the curing speed is high. When these isocyanate compounds are used, a urea bond is produced by a reaction between water and an isocyanate. This urea bond may be contained in the polyurethane layer in the present invention.

Examples of the compound having active hydrogen which may be preferably used as a raw material of the moisture-curable polyurethane in the present invention include alkylene glycols such as ethylene glycol, 1,2-propylene glycol, 1,3-butanediol, 1,4-butanediol, 1,6-hexanediol, neopentyl glycol, dipropylene glycol and diethylene glycol; polyalkylene glycols such as polypropylene glycol, polyethylene glycol and polytetramethylene glycol; poly(alkylene adipates) such as poly(diethylene adipate), poly(tetramethylene adipate), poly(hexamethylene adipate) and poly(neopentylene adipate); polycaprolactones such as poly-ε-caprolactone, polycaprolactone diol and polycaprolactone triol; polybutadiene glycols such as poly(1,4-butadiene)glycol and poly(1,2-butadiene)glycol; poly(alkylene carbonates) such as poly(hexamethylene carbonate); polyester polyols; polyols having three or more hydroxyl groups such as 1,2,4-butanetriol and 1,2,6-hexanetriol; and silicone polyols. Other known compounds having active hydrogen may also be used. Out of these, polyalkylene glycols, polyols having three or more hydroxyl groups, polyalkylene adipates, polyalkylene carbonates, polycaprolactones and polyester polyols may be preferably used since they can reduce the heating temperature at the time of curing and can prevent the thermal deformation and discoloration of the substrate without fail.

The above compounds having active hydrogen may be used alone or in combination of two or more. When an aromatic isocyanate compound such as tolylene diisocyanate or 4,4-diphenylmethane diisocyanate is used, the crystallinity of the obtained moisture-curable polyurethane may become high. Therefore, two or more compounds having active hydrogen are preferably used.

It is preferred that the moisture-curable polyurethane used in the present invention should have a relatively high molecular weight as it has a high curing speed. To increase the molecular weight, there is a method in which the amount of the residual isocyanate group is made small when the above isocyanate compound and the compound having active hydrogen are bonded in a charge ratio which ensures that isocyanate groups remain. Or, there is a method in which a plurality of isocyanate groups existent in the moisture-curable polyurethane are bonded by a chain extender. As the chain extender, the above-described compounds having active hydrogen and diamine compounds such as ethylenediamine may be used. Out of these, alkylene glycols such as 1,3-butanediol, 1,4-butanediol, propylene glycol and 1,6-hexanediol and polyalkylene glycols such as polypropylene glycol are preferably used as they can easily control a chain extension reaction.

This moisture-curable polyurethane is available industrially or as a reagent, as exemplified by the TAKENATE M Series of Mitsui Chemicals, Inc., the TR-SC-P of Tokuyama Corporation, the TAKESEAL PRIMER of Takebayashi Chemical Industry, Co., Ltd. and the URETHANE PRIMER 06 of Alps Chemicals.

In the present invention, a cured body of the moisture-curable polyurethane is formed by applying a primer composition comprising the above moisture-curable polyurethane, the polyrotaxane and a solvent to the optical substrate, removing the solvent and curing the composition.

### (B-3) resin obtained by radical polymerization and/or radically polymerizable monomer

The resin obtained by radical polymerization is, for example, a homopolymer or copolymer obtained by polymerizing a radically polymerizable monomer having a (meth)acrylic group, vinyl group or allyl group.

Examples of the polymer include polyvinyl alcohol, polyvinyl pyrrolidone, polyacrylamide, polyacrylonitrile, olefin resins (such as polyethylene and polypropylene), polyvinyl chloride, styrene resins (such as polystyrene and acrylonitrile-styrene copolymer resin), acrylic resins (such as poly(meth)acrylic acid, polymethyl (meth)acrylate, polycyano (meth)acrylate, polyhydroxyethyl (meth)acrylate and acrylonitrile-methyl acrylate copolymer resin), vinyl chloride-vinyl acetate copolymer resin, polyvinyl butyral, polyisobutylene, polytetrahydrofuran, acrylonitrile-butadiene-styrene copolymer (ABS resin), and polydienes (such as polyisoprene and polybutadiene). These polymers may be random copolymers or block copolymers or modified. These polymers may have a polymerizable and/or nonpolymerizable substituent.

Out of these polymers, from the viewpoint of improving adhesion, acrylic resins such as polymethyl (meth)acrylate and polycyano (meth)acrylate are particularly preferred.

The radically polymerizable monomer is a monomer which is cured by radical polymerization, as exemplified by (meth)acrylic polymerizable monomers, vinyl polymerizable monomers having a vinyl group, allyl polymerizable monomers having an allyl group, and silsesquioxane polymerizable monomers. Examples thereof are given below.

### (meth)acrylic polymerizable monomers

The (meth)acrylate polymerizable monomers are cured by radical polymerization. These compounds may be used to adjust the hardness of a lens. Examples thereof are given below.

Ethylene glycol diacrylate, ethylene glycol dimethacrylate, diethylene glycol diacrylate, diethylene glycol dimethacrylate, triethylene glycol diacrylate, triethylene glycol dimethacrylate, tetraethylene glycol diacrylate, tetraethylene glycol dimethacrylate, polyethylene glycol diacrylate, polyethylene glycol dimethacrylate, propylene glycol diacrylate, propylene glycol dimethacrylate, dipropylene glycol diacrylate, dipropylene glycol dimethacrylate, tripropylene glycol diacrylate, tripropylene glycol dimethacrylate, polypropylene glycol dimethacrylate, polypropylene glycol diacrylate, neopentyl glycol diacrylate, neopentyl glycol dimethacrylate, ethylene glycol bisglycidyl acrylate, bisphenol A diacrylate, bisphenol A dimethacrylate, 2,2-bis[4-acryloxyethoxyphenyl]propane, 2,2-bis(4-methacryloxyethoxyphenyl)propane, 2,2-bis(4-acryloxydiethoxyphenyl)propane, 2,2-bis(4-methacryloxydiethoxyphenyl)propane, 2,2-bis(4-methacryloyloxyethoxyphenyl)propane, 2,2-bis(3,5-dibromo-4-methacryloyloxyethoxyphenyl) propane, 2,2-bis(4-methacryloyloxydipropoxyphenyl)propane, bisphenol F diacrylate, bisphenol F dimethacrylate, 1,1-bis(4-acryloxyethoxyphenyl)methane, 1,1-bis(4-methacryloxyethoxyphenyl)methane, 1,1-bis(4-acryloxydiethoxyphenyl)methane, 1,1-bis(4-methacryloxydiethoxyphenyl)methane, dimethyloltricyclodecane diacrylate, trimethylolpropane triacrylate, trimethylolpropane trimethacrylate, ditrimethylolpropane tetraacrylate, ditrimethylolpropane tetramethacrylate, glycerol diacrylate, glycerol dimethacrylate, pentaerythritol triacrylate, pentaerythritol tetraacrylate, pentaerythritol tetramethacrylate, methylthio acrylate, methylthio methacrylate, phenylthio acrylate, benzylthio methacrylate, xylylene dithiol diacrylate, xylylene dithiol dimethacrylate, mercaptoethyl sulfide diacrylate, mercaptoethyl sulfide dimethacrylate, bifunctional urethane acrylates and bifunctional urethane methacrylates

### Vinyl-based polymerizable monomers

The vinyl-based polymerizable monomers having a vinyl group include methyl vinyl ketone, ethyl vinyl ketone, ethyl vinyl ether, styrene, vinyl cyclohexane, butadiene, 1,4-pentadiene, divinyl sulfide, divinyl sulfone, 1,2-divinylbenzene, 1,3-divinyl-1,1,3,3-tetramethylpropane disiloxane, diethylene glycol divinyl ether, divinyl adipate, divinyl sebacate, ethylene glycol divinyl ether, divinyl sulfoxide, divinyl persulfide, dimethyl divinyl silane, 1,2,4-trivinyl cyclohexane, methyl trivinyl silane, styrene, chlorostyrene, methylstyrene, bromostyrene, dibromostyene, divinylbenzene, 3,9-divinylspirobi(m-dioxane), α-methylstyrene and α-methylstyrene dimer.

### Allyl polymerizable monomers

Examples of the allyl polymerizable monomer having an allyl group are given below.

Allyl glycidyl ether, diallyl phthalate, diallyl terephthalate, diallyl isophthalate, diallyl carbonate, diethylene glycol bisallyl carbonate, methoxy polyethylene glycol allyl ether, diethylene glycol bisallyl carbonate, methoxy polyethylene glycol allyl ether (particularly an average molecular weight of 550), methoxy polyethylene glycol allyl ether (particularly an average molecular weight of 350), methoxy polyethylene glycol allyl ether (particularly an average molecular weight of 1,500), polyethylene glycol allyl ether (particularly an average molecular weight of 450), methoxy polyethylene glycol-polypropylene glycol allyl ether (particularly an average molecular weight of 750), butoxy polyethylene glycol-polypropylene glycol allyl ether (particularly an average molecular weight of 1,600), methacryloyloxy polyethylene glycol-polypropylene glycol allyl ether (particularly an average molecular weight of 560), phenoxy polyethylene glycol allyl ether (particularly an average molecular weight of 600), methacryloyloxy polyethylene glycol allyl ether (particularly an average molecular weight of 430), acryloyloxy polyethylene glycol allyl ether (particularly an average molecular weight of 420), vinyloxy polyethylene glycol allyl ether (particularly an average molecular weight of 560), styryloxy polyethylene glycol allyl ether (particularly an average molecular weight of 650) and methoxy polyethylene thioglycol allyl thioether (particularly an average molecular weight of 730)
Since the allyl polymerizable monomer serves as a chain transfer agent, the photochromic properties (color optical density, fading speed) of a photochromic composition can be improved.

### Silsesquioxane polymerizable monomers

The silsesquioxane polymerizable monomers can take various molecular structures such as cage-like, ladder-like and random structures and have a radically polymerizable group such as (meth)acrylic group.

An example of the silsequioxane polymerizable monomer is represented by the following formula (1).

(R¹-SiO_{3/2})ₙ (1)

{In the above formula, n is an integer of 3 to 100 which indicates the polymerization degree, and a plurality of R¹'s may be the same or different and each a radically polymerizable group, an organic group containing a radically polymerizable group, or an organic group containing a hydrogen atom, alkyl group, cycloalkyl group, alkoxy group, phenyl group, hydroxyl group and/or thiol group, with the proviso that at least one R¹ is a radically polymerizable group or an organic group containing a radically polymerizable group.}

Examples of the radically polymerizable group or the organic group containing a radically polymerizable group represented by R¹ include (meth) acrylic group; organic groups having a (meth) acrylic group such as (meth) acryloyloxypropyl group and (3-(meth)acryloyloxypropyl)dimethylsiloxy group; allyl group; organic groups having an allyl group such as allylpropyl group and allylpropyl dimethylsiloxy group; vinyl group; and organic groups having a vinyl group such as vinylpropyl group and vinyldimethylsiloxy group.

Other radically polymerizable monomers include γ-methacryloyloxypropyl trimethoxysilane and γ-methacryloyloxypropylmethyl dimethoxysilane.

Out of these radically polymerizable monomers, (meth)acrylate polymerizable monomers are particularly preferred from the viewpoint of the improvement of adhesion and hardness.

### (B-4) epoxy polymerizable monomer

This polymerizable monomer has an epoxy group as a polymerizable group in the molecule and is cured by ring-opening polymerization. The epoxy polymerizable monomer of the present invention has especially the effect of improving hardness. Epoxy polymerizable monomers are roughly divided into aliphatic epoxy compounds, alicyclic epoxy compounds and aromatic epoxy compounds. Examples thereof are given below. Out of these, polyfunctional epoxy compounds are particularly preferred.

Aliphatic epoxy compounds; ethylene oxide, 2-ethyl oxirane, butyl glycidyl ether, phenyl glycidyl ether, 2,2'-methylene bisoxirane, 1,6-hexanediol diglycidyl ether, ethylene glycol diglycidyl ether, diethylene glycol diglycidyl ether, triethylene glycol diglycidyl ether, tetraethylene glycol diglycidyl ether, nonaethylene glycol diglycidyl ether, propylene glycol diglycidyl ether, dipropylene glycol diglycidyl ether, tripropylene glycol diglycidyl ether, tetrapropylene glycol diglycidyl ether, nonapropylene glycol diglycidyl ether, neopentyl glycol diglycidyl ether, trimethylolpropane triglycidyl ether, glycerol triglycidyl ether, diglyceroltetraglycidyl ether, pentaerythritol tetraglycidyl ether, diglycidyl ethers of tris(2-hydroxyethyl)isocyanurate and triglycidyl ethers of tris(2-hydroxyethyl)isocyanurate
Alicyclic epoxy compounds; isophoronediol diglycidyl ether and bis-2,2-hydroxycyclohexylpropane diglycidyl ether
Aromatic epoxy compounds; resorcin diglycidyl ether, bisphenol A diglycidyl ether, bisphenol F diglycidyl ether, bisphenol S diglycidyl ether, diglycidyl orthophthalate, phenol novolak polyglycidyl ether and cresol novolak polyglycidyl ether
Besides the above compounds, epoxy compounds having an epoxy group and a sulfur atom in the molecule may also be used. The sulfur atom-containing epoxy compounds contribute especially to the improvement of refractive index and are divided into chain aliphatic and cyclic aliphatic types, as exemplified by the following compounds.

Chain aliphatic sulfur atom-containing epoxy compounds; bis(2,3-epoxypropyl)sulfide, bis(2,3-epoxypropyl)disulfide, bis(2,3-epoxypropylthio)methane, 1,2-bis(2,3-epoxypropylthio)ethane, 1,2-bis(2,3-epoxypropylthio)propane, 1,3-bis(2,3-epoxypropylthio)propane, 1,3-bis(2,3-epoxypropylthio)-2-methylpropane, 1,4-bis(2,3-epoxypropylthio)butane, 1,4-bis(2,3-epoxypropylthio)-2-methylbutarie, 1,3-bis(2,3-epoxypropylthio)butane, 1,5-bis(2,3-epoxypropylthio)pentane, 1,5-bis(2,3-epoxypropylthio)-2-methylpentane, 1,5-bis(2,3-epoxypropylthio)-3-thiapentane, 1,6-bis(2,3-epoxypropylthio)hexane, 1,6-bis(2,3-epoxypropylthio)-2-methylhexane, 3,8-bis(2,3-epoxypropylthio)-3,6-dithiaoctane, 1,2,3-tris(2,3-epoxypropylthio)propane, 2,2-bis(2,3-epoxypropylthio)-1,3-bis(2,3-epoxypropylthiomethyl)propane and 2,2-bis(2,3-epoxypropylthiomethyl)-1-(2,3-epoxypropylthio)butane
Cyclic aliphatic sulfur atom-containing epoxy compounds; 1,3-bis(2,3-epoxypropylthio)cyclohexane, 1,4-bis(2,3-epoxypropylthio)cyclohexane, 1,3 -bis(2,3-epoxypropylthiomethyl)cyclohexane, 1,4 -bis(2,3-epoxypropylthiomethyl)cyclohexane, 2,5 -bis(2,3-epoxypropylthiomethyl)-1,4-dithiane, 2,5 -bis(<2-(2,3-epoxypropylthio)ethyl>thiomethyl)-1,4-dithiane and 2,5-bis(2,3-epoxypropylthiomethyl)-2,5-dimethyl-1,4-dithiane
As the resin and/or precursor thereof (B) in the present invention, the polyurethane (B-1) and the polyurethane precursor (B-2) are preferred since they have high adhesion to the optical substrate and the photochromic coat layer and high surface hardness, and the moisture-curable polyurethane which is a composition comprising the polyurethane precursor (B-2) is particularly preferred.

### <(C) solvent>

In the primer composition of the present invention, (C) a solvent may be added as required to dilute, dissolve or disperse the polyrotaxane (A) and the resin and/or precursor thereof (B) uniformly in the primer composition according to the types of these components, adjust the viscosity of the primer composition and form a coating film having high homogeneity. (This component may be simply referred to as "component (C)" hereinafter.)

The solvent in use should be adjusted according to the types and amounts of the polyrotaxane (A) and the resin and/or precursor thereof (B), and a solvent in which the polyrotaxane (A) and the resin and/or precursor thereof (B) are easily diluted, dissolved or dispersed is selected.

Although the solvent in use is not particularly limited, examples thereof include water; alcohols such as methanol, ethanol, isopropyl alcohol and t-butanol; ketones such as acetone, methyl ethyl ketone and methyl isobutyl ketone; esters such as methyl formate, ethyl ethyl acetate and butyl acetate; glycols such as ethylene glycol, propylene glycol and butylene glycol; aromatic hydrocarbons such as toluene and xylene; chlorinated hydrocarbons such as methylene chloride and chloroform; ethers such as methyl-t-butyl ether, tetrahydrofuran and dioxane; cellosolves such as methyl cellsolve and propylene glycol monoethyl ether; cyclic amides such as N-methyl pyrrolidone and N-ethyl pyrrolidone; dimethyl sulfoxide; methoxypropyl acetate; and propylene glycol monoethyl ether acetate.

The content of the solvent is not particularly limited. To improve the coatability of the primer composition, the amount of the solvent is preferably adjusted to ensure that the solids content of the primer composition becomes 0.1 to 98 mass%. The solids content include the above polyrotaxane (A) and the above resin and/or precursor thereof (B).

When a water dispersion of the resin and/or precursor thereof (B) is used in the primer composition of the present invention, an organic solvent having high affinity for water is preferably used. Example of the organic solvent include alcohols such as methanol, ethanol and isopropyl alcohol; glycols such as ethylene glycol, propylene glycol and butylene glycol; ether derivatives thereof; N-ethyl pyrrolidone; dimethyl sulfoxide; propylene glycol monoethyl ether acetate; and methoxypropyl acetate.

### <(D) polymerization curing accelerator>

In the primer composition of the present invention, various polymerization curing accelerators may be used to accelerate polymerization and curing swiftly according to the types of the polyrotaxane (A) and the resin and/or precursor thereof (B) (this component may be simply referred to as "component (D)" hereinafter.).

When it is used for a reaction between a hydroxyl group or thiol group and an isocyanate group or isothiocyanate group, a reaction catalyst for urethane or urea, or a condensing agent is used as the polymerization curing accelerator.

When an episulfide compound, thietanyl compound or epoxy compound is used, an epoxy curing agent or a cationic polymerization catalyst for the ring-opening polymerization of an epoxy group is used as the polymerization curing accelerator.

When a radically polymerizable monomer having a (meth)acrylic group or vinyl group is contained, a radical polymerization initiator is used as the polymerization curing accelerator.

### (reaction catalyst for urethane or urea)

This reaction catalyst is used for the formation of a poly(thio)urethane bond through a reaction between polyiso(thia)cyanate and a polyol or polythiol. Examples of this polymerization catalyst include tertiary amines, inorganic or organic salts corresponding to these, phosphines, quaternary ammonium salts, quaternary phosphonium salts, Lewis acids and organic sulfonic acids. Specific examples thereof are given below. When catalytic activity is too high according to the type of the selected compound, it can be suppressed by using a mixture of a tertiary amine and a Lewis acid.

Tertiary amines; triethylamine, tri-n-propylamine, triisopropylamine, tri-n-butylamine, triisobutylamine, triethylamine, hexamethylene tetramine, N,N-dimethyl octylamine, N,N,N',N'-tetramethyl-1,6-diaminohexane, 4,4'-trimethylenebis(1-methylpiperidine) and 1,8-diazabicyclo-(5,4,0)-7-undecene
Phosphines; trimethylphosphine, triethylphosphine, tri-n-propylphosphine, triisopropylphosphine, tri-n-butylphosphine, triphenylphosphine, tribenzylphosphine, 1,2-bis(diphenylphosphino)ethane and 1,2-bis(dimethylphosphino)ethane
Quaternary ammonium salts; tetramethylammonium bromide, tetrabutylammonium chloride and tetrabutylammonium bromide
Quaternary phosphonium salts; tetramethylphosphonium bromide, tetrabutylphosphonium chloride and tetrabutylphosphonium bromide
Lewis acids; triphenyl aluminum, dimethyltin dichloride, dimethyltin bis(isooctylthioglycolate), dibutyltin dichloride, dibutyltin dilaurate, dibutyltin maleate, dibutyltin maleate polymer, dibutyltin dilicinolate, dibutyltin bis(dodecylmercaptide), dibutyltin bis(isooctylthioglycolate), dioctyltin dichloride, dioctyltin maleate, dioctyltin maleate polymer and dioctyltin bis(butyl maleate)
Metals; copper oleate, copper acetylacetonate, iron acetylacetonate, iron naphthenate, iron lactate, iron citrate, iron gluconate, potassium octanoate and 2-ethylhexyl titanate
Organic sulfonic acids; methane sulfonic acid, benzene sulfonic acid and p-toluene sulfonic acid

### (condensing agent)

Examples of the condensing agent are given below.

Inorganic acids; hydrogen chloride, hydrogen bromide, sulfuric acid and phosphoric acid, and the like
Organic acids; p-toluenesulfonic acid and camphorsulfonic acid, and the like
Acidic ion exchange resins; Amberlite and Amberlyst, and the like
Carbodiimides; dicyclohexyl carbodiimide and 1-ethyl-3-(3-dimethylaminopyrrolyl)-carbodiimide

### (epoxy curing agent)

Examples of the epoxy curing agent are given below.

Amine compounds and salts thereof; 2-methylimidazole, 2-ethyl-4-methylimidazole, 1,8-diazabicyclo(5,4,0)undecene-7-trimethylamine, benzyl dimethylamine, triethylamine, 2,4,6-tris(dimethylaminomethyl)phenol and 2-(dimethylaminomethyl)phenol
Quaternary ammonium salts; tetramethylammonium chloride, benzyltrimethylammonium bromide and tetrabutylammonium bromide
Organic phosphine compounds; tetra-n-butylphosphonium benzotriazoleate and tetra-n-butylphosphonium-o,o-diethyl phosphorodithioate
Metal carboxylic acid salts; chromium (III) tricarboxylate and tin octylate
Acetylacetone chelate compounds; chromium acetylacetonate

### (cationic polymerization catalyst)

Examples of the cationic polymerization catalyst are given below.

Lewis acid-based catalysts; BF3·amine complex, PF5, BF3, AsF5 and SbF5
Thermosetting cationic polymerization catalysts; phosphonium salts, quaternary ammonium salts, sulfonium salts, benzylammonium salts, benzylpyridinium salts, benzylsulfonium salts, hydrazinium salts, carboxylic acid esters, sulfonic acid esters and amine imides
Ultraviolet curable cationic polymerization catalysts; diaryl iodonium hexafluorophosphate and bis(dodecylphenyl)iodonium hexafluoroantimonate

### (radical polymerization initiator)

Radical polymerization initiators include photopolymerization initiators and thermopolymerization initiators and are suitably selected according to the type (s) of the resin and/or precursor thereof (B) in use. Examples of the photopolymerization initiators are given below.

Acetophenone compounds; 1-phenyl-2-hydroxy-2-methylpropan-1-one, 1-hydroxycyclohexylphenyl ketone and 1-(4-isopropylphenyl)-2-hydroxy-2-methylpropan-1-one
α-dicarbonyl compounds; 1,2-diphenylethanedione and methylphenyl glycoxylate
Acylphosphine oxide compounds; 2,6-dimethylbenzoyldiphenyl phosphine oxide, 2,4,6-trimethylbenzoyldiphenyl phosphine oxide, methyl 2,4,6-trimethylbenzoyldiphenyl phosphinate, 2,6-dichlorobenzoyldiphenyl phosphine oxide and 2,6-dimethoxybenzoyldiphenyl phosphine oxide
When a photopolymerization initiator is used, a known polymerization curing acceleration aid such as a tertiary amine may be used in combination.

Examples of the thermopolymerization initiators are given below.

Diacyl peroxides; benzoyl peroxide, p-chlorobenzoyl peroxide, decanoyl peroxide and lauroyl peroxide
Acetyl peroxide peroxy esters; t-butylperoxy-2-ethyl hexanate, t-butylperoxy neodecanate, cumylperoxy neodecanate and t-butylperoxy benzoate
Percarbonates; diisopropylperoxy dicarbonate and di-sec-butylperoxy dicarbonate
Azo compounds; azobisisobutyronitrile
The amount of the polymerization curing accelerator (D) is preferably 0.1 to 5 wt% based on the weight of the component having a polymerizable group.

### <(E) hydrolyzable group-containing organic silicon compound>

The primer composition for optical articles of the present invention may comprise (E) a hydrolyzable group-containing organic silicon compound. (This component may be simply referred to as "component (E)" hereinafter). By blending this component (E), adhesion between the obtained primer coat layer and the optical substrate (plastic lens), adhesion between the primer coat layer and the hard coat layer and further adhesion between the primer coat layer and the photochromic coat layer can be further improved.

Preferred examples of the hydrolyzable group-containing organic silicon compound (E) include γ-glycidoxypropyl trimethoxysilane, γ-glycidoxypropylmethyl dimethoxysilane, γ-glycidoxypropylmethyl diethoxysilane, γ-glycidoxypropyl triethoxysilane, β-(3,4-epoxycyclohexyl)ethyl trimethoxysilane, tetraethoxysilane, vinyl trimethoxysilane, vinyl triethoxysilane, vinyl triacetoxysilane, methyl trimethoxysilane, methyl triethoxysilane, methyl triphenoxysilane, dimethyl dimethoxysilane, trimethyl methoxysilane, phenyl trimethoxysilane, diphenyl dimethoxysilane, cyclohexylmethyl dimethoxysilane, n-propyl trimethoxysilane, n-butyl trimethoxysilane, isobutyl trimethoxysilane, isobutyl triethoxysilane, n-hexyl trimethoxysilane, n-hexyl triethoxysilane, n-octyl triethoxysilane, n-decyl trimethoxysilane, 1,6-bistrimethoxysilane, 3-ureidopropyl triethoxysilane, bis[3-(diethoxymethylsilyl)propyl]carbonate, trifluoropropyl trimethoxysilane, perfluorooctylethyl triethoxysilane, γ-chloropropyl trimethoxysilane, vinyl tri(β-methoxy-ethoxy)silane, allyl trimethoxysilane, γ-acryloxypropyl trimethoxysilane, γ-acryloxypropyl triethoxysilane, γ-methacryloxypropyl trimethoxysilane, γ-methacryloxypropyl triethoxysilane, γ-methacryloxypropyl dimethoxymethylsilane, γ-mercaptopropyl trialkoxysilane, γ-aminopropyl trimethoxysilane, γ-aminopropyl triethoxysilane, N-phenyl-γ-aminopropyl trimethoxysilane, 3-triethoxysilyl-N-(1,3-dimethyl-butylidene)propylamine, N-2-(aminoethyl)-3-aminopropyl triethoxysilane, N-2-(aminoethyl)-3-aminopropyl trimethoxysilane, N-2-(aminoethyl)-3-aminopropylmethyl dimethoxysilane, p-styryl trimethoxysilane, 3-isocyanatopropyl triethoxysilane, partial or full hydrolyzates obtained by the hydrolysis of some or all of the hydrolyzable groups of these compounds, and partial condensates of these compounds. Out of these, γ-glycidoxypropyl trimethoxysilane, γ-glycidoxypropylmethyl dimethoxysilane, tetraethoxysilane, methyl triethoxysilane, γ-acryloxypropyl triethoxysilane, γ-methacryloxypropyl trimethoxysilane, partial or full hydrolyzates obtained by the hydrolysis of some or all of the hydrolyzable groups of these compounds and partial condensates of these compounds are preferably used to further improve adhesion to the optical substrate and adhesion between the hard coat layer obtained by curing a coating composition comprising inorganic oxide fine particles and a hydrolyzable group-containing organic silicon compound and the photochromic coat layer formed on the primer coat layer. The above hydrolyzable group-containing organic silicon compounds may be used alone or in combination of two or more.

The amount of the hydrolyzable group-containing organic silicon compound (E) is preferably not more than 50 mass% based on the total mass of the components (A) and (B). The amount of the above component (E) is the amount of the hydrolyzable group-containing organic silicon compound which is not hydrolyzed.

### <(F) inorganic oxide fine particles>

The primer composition for optical articles of the present invention may comprise (F) inorganic oxide fine particles (this component may be simply referred to as "component (F)" hereinafter.). By blending the inorganic oxide fine particles (F), the refractive index of the obtained primer coat layer can be improved, and the scratch resistance of the hard coat layer can be further improved. The inorganic oxide fine particles (F) are used in combination with the above organic silicon compound (E) or alone without the organic silicon compound (E). Even when the primer composition for optical articles is used to form the primer coat layer for the photochromic coat layer, the improvement of the refractive index of the obtained primer coat layer and the scratch resistance of the photochromic layer are expected by blending the inorganic oxide fine particles (F).

As the inorganic oxide fine particles (F), for example, silica is used. When it is used to enhance the refractive index, fine particles of an inorganic oxide or composite inorganic oxide containing at least one element selected from Si, Al, Ti, Fe, In, Zr, Au, Sn, Sb, W and Ce, especially an inorganic oxide or composite inorganic oxide containing at least one element selected from Si, Al, Ti, Fe, In, Zr, Au, Sn, Sb and W are preferably used.

As for the particle diameter of the inorganic oxide fine particles (F), inorganic oxide fine particles having a primary particle diameter observed through an electron microscope (TEM) of 1 to 300 nm may be preferably used. The fine particles having this particle size are generally dispersed in water or some of organic solvents which will be described hereinafter, especially alcohol solvents as a dispersion medium before use. In general, the fine particles are dispersed in a colloid to prevent the agglomeration of the particles. For example, in the present invention, it is preferred that the inorganic oxide fine particles should be blended into the primer composition in the form of a sol prepared by dispersing them in a water-soluble organic solvent such as methanol, ethanol or isopropanol, or water so that they are uniformly dispersed in the primer composition.

As the water-soluble organic solvent used as a dispersion medium for the inorganic oxide fine particles (F), alcohol solvents such as isopropanol, ethanol, methanol and ethylene glycol are preferred as described above but methyl ethyl ketone, methyl isobutyl ketone and dimethyl acetamide may also be used.

That is, in the present invention, the inorganic oxide fine particles (F) are preferably mixed with other components in the form of a sol containing the inorganic oxide fine particles (F) dispersed in water or the above water-soluble organic solvent, specifically, a silica sol, inorganic oxide fine particle sol or composite inorganic oxide fine particle sol. The order of mixing the inorganic oxide fine particles with the other components is not particularly limited.

The silica sol is available industrially and, for example, a sol containing water as a dispersion medium is commercially available from Nissan Chemical Industries, Ltd. under the trade names of SNOWTEX OXS, SNOWTEX OS, SNOWTEX O and SNOWTEX O-40. The sol containing a water-soluble organic solvent as a dispersion medium is commercially available from Nissan Chemical Industries, Ltd. under the trade names of METHANOL SILICA SOL, MA-ST-MS (dispersion medium; methanol) and IPA-ST (dispersion medium; isopropanol).

Commercially available products of the composite inorganic oxide fine particle sol may also be used, as exemplified by the HX Series, HIT Series and HT Series of Nissan Chemical Industries, Ltd. and the OPT LAKE Series of JGC C&C.

In the present invention, although the amount of the inorganic oxide fine particles (F) may be suitably determined according to physical properties required for the finally obtained primer coat layer, the solid content of the inorganic oxide fine particles is 5 to 150 parts by mass, preferably 10 to 130 parts by mass based on 100 parts by mass of the total of the polyrotaxane (A) and the resin and/or precursor thereof (B). When the amount of the inorganic oxide fine particles (F) satisfies the above range in terms of the inorganic oxide fine particles, the deterioration of impact resistance and adhesion in an optical article in which the hard coat layer or the photochromic coat layer is formed can be suppressed.

### <(G) Other components>

The primer composition of the present invention may be optionally mixed with, for example, stabilizers and additives such as surfactant, ultraviolet absorbent, infrared absorbent, ultraviolet stabilizer, antioxidant, discoloration inhibitor, antistatic agent, fluorescent dye, dye, pigment and aroma chemical besides the above components.

A surfactant may be added as a leveling agent to the primer composition used in the present invention so as to improve the smoothness of the obtained primer coat layer. Any known surfactant may be used but preferred examples thereof include silicon-based, fluorine-based, acrylic and vinyl-based surfactants. The amount of the leveling agent is 10 to 10,000 ppm in the primer composition for optical articles of the present invention.

The primer composition of the present invention comprises substantially no photochromic compound. "Comprising substantially no photochromic compound" means that the composition does not comprise a photochromic compound or the content of the photochromic compound is so low that photochromic properties high enough for coatability to an optical substrate are not obtained even when the composition comprises the photochromic compound. Stated more specifically, the content of the photochromic compound in the primer composition is preferably not more than 0.01 mass%, more preferably not more than 0.005 mass%, much more preferably not more than 0.001 mass%, most preferably 0 mass% (not contained). When the photochromic laminate of the present invention is to be produced, the photochromic compound may be contained in the formed primer coat layer inevitably. In the present invention, a photochromic laminate having this primer coat layer is not excluded.

### <primer composition production method>

The primer composition of the present invention can be produced by mixing together the above components (A) and (B) and optionally the components (C), (D), (E), (F) and (G). As the component (E), a hydrolyzate thereof is preferably mixed as described above. The order of mixing these components is not particularly limited, and these components should be mixed together by a known method.

Although the component (E) may be directly mixed with the above components (A), (B) and (C), it is preferably mixed with these components after it is completely hydrolyzed. When the component (A) contains water, the component (E) can be hydrolyzed by mixing with the other components directly but preferably a hydrolyzate thereof is mixed as described above. Therefore, it is preferred that a hydrolyzate obtained by hydrolyzing the component (E) with an acid aqueous solution completely should be mixed with the other components. In this case, the acid aqueous solution is preferably used in an amount which ensures that the component (E) is completely hydrolyzed, and particularly preferably, a 0.001 to 1 N hydrochloric acid aqueous solution is used in an equal number of moles to 5 times the number of moles of the hydrolyzable group (alkoxysilyl group) contained in the component (E). The above number of moles is the number of moles of water.

The hydrolyzed component (E) may be mixed with the above components (A), (B) and (C) while it contains the acid aqueous solution.

When the acid aqueous solution is used as described above, the preferred amount of water includes the amount of this acid aqueous solution in the primer composition of the present invention. A lower alcohol produced when the component (E) is hydrolyzed is not contained in the preferred amount of the above component (C).

The amount of the inorganic oxide fine particles (F) is preferably not more than 150 mass% based on the total mass of the components (A) and (B).

In the present invention, when the component (F) is used in the form of a water dispersion sol or organic solvent dispersion sol, the amount of the component (C) includes the amount of water or the organic solvent contained in these sols.

The amount of an emulsifier as the component (G) may be arbitrary but preferably 0.01 to 10 mass% based on the above water dispersion polyurethane.

The primer composition of the present invention which is produced as described above is preferably filtered to remove foreign matter before it is applied to the optical substrate from the viewpoints of the improvement of the appearance of the obtained primer coat layer, adhesion between the optical substrate and the primer coat layer and adhesion between the primer coat layer and the photochromic coat layer.

### <primer coat layer production method>

The primer coat layer can be formed by applying the primer composition of the present invention to the optical substrate and curing (drying) it. The curing method is thermal curing or photo curing according to the types of the functional groups of the components (A) and (B).

The primer coat layer formed from the primer composition does not degrade the optical properties of the optical substrate, especially a plastic lens. Therefore, a plastic lens having the primer coat layer can be used as an optical article directly. Further, a coating composition comprising inorganic oxide fine particles and an organic silicon compound is applied to the primer coat layer and cured to forma hard coat layer, thereby making it possible to obtain an optical article (laminate) having excellent impact resistance and scratch resistance.

In the present invention, when the primer composition is applied to the optical substrate, the optical substrate is preferably subjected to a pre-treatment so as to improve adhesion. The pre-treatment may be degreasing with an organic solvent, chemical treatment with a basic aqueous solution or acidic aqueous solution, polishing by using an abrasive, plasma treatment by using atmospheric or low-pressure plasma, corona discharge treatment, flame treatment or UV ozone treatment. To improve adhesion between the optical substrate and the primer coat layer, degreasing with an organic solvent, alkali treatment, polishing, plasma treatment, corona discharge treatment, UV ozone treatment or a combination thereof is preferably carried out.

Although the method of applying the primer composition to the optical substrate (plastic lens) is not particularly limited, dip coating, spin coating or dip spin coating may be employed. Spin coating is particularly preferred as a coating film having a good appearance is easily obtained.

In the present invention, when the primer composition comprises a solvent or when the primer composition is a thermosetting primer composition, the primer composition applied to the optical substrate and/or the photochromic coat layer by the above method is dried to remove the solvent. In the present invention, the primer coat layer made of the primer composition coated by the above method is preferably formed by heating to remove the solvent after coating. The heating temperature at this point is not particularly limited but preferably room temperature to 200°C to prevent the deformation and discoloration of the optical substrate caused by heating. The heating time is not particularly limited but generally 1 minute to 1 hour.

In the case of a photosetting primer composition, the primer coat layer can be obtained by applying the primer composition by spin coating, placing it in an inert gas such as nitrogen and irradiating it with UV. Further, after the photochromic coat layer which will be described hereinafter is formed by coating, the primer coat layer and the photochromic coat layer may be optically cured at the same time.

When the primer composition is applied by spin coating, the viscosity at 25°C of the primer composition is adjusted to preferably 5 to 200 cP, particularly preferably 10 to 100 cP as a primer coat layer having uniform thickness is easily obtained. The viscosity can be adjusted by changing the type and amount of the dispersion medium.

The thickness of the above primer coat layer which is formed after drying is 0.1 to 20 µm, preferably 1 to 10 µm, more preferably 1 to 7 µm from the viewpoints of excellent optical properties, adhesion between the optical substrate and the primer coat layer and adhesion between the primer coat layer and the photochromic coat layer.

When the primer composition of the present invention is to be photopolymerized, UV intensity out of polymerization conditions has an influence upon the properties of the obtained photochromic laminate. Although this illumination condition cannot be limited unconditionally as it is affected by the type and amount of the photopolymerization initiator and the types of the polymerizable monomers, this condition is preferably selected to ensure that 50 to 500 mW/cm² UV light having a wavelength of 365 nm is irradiated for 0.5 to 5 minutes.

### <laminate obtained by using the primer composition of the present invention>

The above primer composition of the present invention can be used to form the primer coat layer in a photochromic laminate having a photochromic coat layer formed above the optical substrate. A photochromic laminate which hardly produces an appearance defect such as a crack in the photochromic coat layer and has such high surface hardness that it is hardly scratched while it retains high photochromic properties can be obtained advantageously by forming the primer coat layer which is a cured product of the primer composition of the present invention between the optical substrate and the photochromic coat layer and/or between the photochromic coat layer and the hard coat layer in the photochromic laminate having the photochromic coat layer and the hard coat layer above the optical substrate in this order. The production of a crack caused by shrinkage at the time of curing the photochromic coat layer can be effectively suppressed by forming the primer coat layer from the primer composition for optical articles of the present invention between the optical substrate and the photochromic coat layer. Further, the production of a crack caused by shrinkage at the time of curing the hard coat layer can be effectively suppressed by forming the primer coat layer between the photochromic layer and the hard coat layer.

A description is subsequently given of the optical substrate, the photochromic coat layer and the hard coat layer constituting the photochromic laminate of the present invention.

### <optical substrate>

The optical substrate used in the present invention is not particularly limited if it is a substrate having optical transparency, and glass and plastic lenses and known lens substrates such as window glass for houses and automobiles may be used but plastic lenses are particularly preferably used.

As the above plastic lenses may be used thermoplastic resin lenses such as (meth)acrylic resin and polycarbonate resin lenses; crosslinkable resin lenses such as polyfunctional (meth)acrylic resin, allyl resin, thiourethane resin, urethane resin and thioepoxy resin lenses, and known lenses which are now used as plastic lenses.

### <photochromic coat layer>

The photochromic coat layer in the photochromic laminate of the present invention is formed on the optical substrate by applying a coating agent composed of a photochromic curable composition and curing it.

The above photochromic curable composition may comprise a photochromic compound, a (meth)acrylic monomer and a polymerization initiator. As the photochromic curable composition, any photochromic curable composition which can be used in conventional coating methods may be used. However, from the viewpoints of photochromic properties, optical properties and the solvent resistance, surface hardness and adhesion of the photochromic layer, photochromic curable compositions disclosed by WO03/011967, WO04/050775, WO05/014717, WO2011/125956, WO2013/008825, JP-A 2013-072000, JP-A 2013-155220 and WO2014/13680 are preferably used.

As a component used in the photochromic curable composition in the present invention, a known (meth)acrylic monomer may be used without restriction. Examples of the (meth)acrylic monomer include trimethylolpropane trimethacrylate, trimethylolpropane triacrylate, tetramethylolmethane trimethacrylate, tetramethylolmethane triacrylate, tetramethylolmethane tetramethacrylate, tetramethylolmethane tetraacrylate, trimethylolpropane triethylene glycol trimethacrylate, trimethylolpropane triethylene glycol triacrylate, ditrimethylolpropane tetramethacrylate, ditrimethylolpropane tetraacrylate, dipentaerythritol hexaacrylate, bisphenol A dimethacrylate, 2,2-bis(4-methacryloyloxyethoxyphenyl)propane, bis(4-methacryloyloxypolyethylene glycol phenyl)propane having an average molecular weight of 628, 2,2-bis(4-methacryloyloxypolyethylene glycol phenyl)propane having an average molecular weight of 804, 2,2-bis(4-acryloyloxypolyethylene glycol phenyl)propane having an average molecular weight of 776, methoxy polyethylene glycol methacrylate having an average molecular weight of 468, diethylene glycol dimethacrylate, triethylene glycol dimethacrylate, tetraethylene glycol dimethacrylate, pentaethylene glycol dimethacrylate, pentapropylene glycol dimethacrylate, diethylene glycol diacrylate, triethylene glycol diacrylate, tetraethylene glycol diacrylate, pentaethylene glycol diacrylate, tripropylene glycol diacrylate, tetrapropylene glycol diacrylate, pentapropylene glycol diacrylate, polyethylene glycol dimethacrylate having an average molecular weight of 330, polyethylene glycol dimethacrylate having an average molecular weight of 536, polyethylene glycol dimethacrylate having an average molecular weight of 736, tripropylene glycol dimethacrylate, tetrapropylene glycol dimethacrylate, polypropylene glycol dimethacrylate having an average molecular weight of 536, polyethylene glycol diacrylate having an average molecular weight of 258, polyethylene glycol diacrylate having an average molecular weight of 308, polyethylene glycol diacrylate having an average molecular weight of 508, polyethylene glycol diacrylate having an average molecular weight of 708, polycarbonate di(meth)acrylate which is a reaction product of a polycarbonate diol and (meth)acrylic acid, polyfunctional urethane (meth)acrylates such as urethane oligomer tetraacrylate and urethane oligomer hexamethacrylate, polyfunctional polyester (meth)acrylates such as polyester oligomer hexaacrylate, silsesquioxane monomers having a (meth)acrylic group and cage-like, ladder-like and random structures, 2-isocyanatoethyl methacrylate, γ-methacryloxypropyl trimethoxysilane, γ-methacryloxypropylmethyl dimethoxysilane and glycidyl methacrylate.

Out of these, photochromic curable compositions disclosed by WO2014/13680 and JP-A 2015-025063 are preferably used to obtain a photochromic coat layer which hardly produces an appearance defect such as a crack and has high surface hardness.

That is, a photochromic curable composition comprising
1) polycarbonate di(meth)acrylate, and
2) a polyfunctional (meth)acrylate such as trimethylolpropane trimethacrylate or ditrimethylolpropane tetramethacrylate, and
3) a di (meth) acrylate having a bisphenol A skeleton such as 2,2-bis[4-(methacryloxy·polyethoxy)phenyl]propane (average chain length of ethylene glycol chains of 10, average molecular weight of 804), or a photochromic curable composition comprising
4) a polyfunctional (meth)acrylate such as trimethylolpropane trimethacrylate or ditrimethylolpropane tetramethacrylate,
5) a di(meth)acrylate having a bisphenol A skeleton such as 2,2-bis[4-(methacryloxy·polyethoxy)phenyl]propane (average chain length of ethylene glycol chains of 10, average molecular weight of 804) and
6) at least one long-chain (meth)acrylic monomer selected from the group consisting of a polyalkylene glycol di(meth)acrylate having a molecular weight of 600 to 2,000 and a urethane di(meth)acrylate having a molecular weight of 600 to 2,000 is preferred.

Further, a photochromic curable composition comprising 10 to 30 mass% of 1), 35 to 55 mass% of 2) and 15 to 55 mass% of 3) based on 100 mass% of the total of all the (meth)acrylate monomers 1) to 3) or a photochromic curable composition comprising 35 to 70 mass% of 4), 10 to 40 mass% of 5) and 10 to 40 mass% of 6) based on 100 mass% of the total of all the (meth) acrylate monomers 4) to 6) is more preferred.

Adhesion to the primer coat layer formed from the primer composition of the present invention can be further improved by using a photochromic curable composition having the following composition. Further, the photochromic properties of the obtained photochromic laminate can be improved as well.

Stated more specifically, a photochromic curable composition comprising 7) a polyfunctional (meth)acrylate such as trimethylolpropane trimethacrylate or ditrimethylolpropane tetramethacrylate, 8) at least one long-chain (meth)acrylic monomer selected from the group consisting of a polyalkylene glycol di(meth)acrylate having a molecular weight of 600 to 2,000 and a urethane di(meth)acrylate having a molecular weight of 600 to 2,000 and 9) a polyrotaxane monomer having a (meth) acrylate group is preferred. A photochromic curable composition comprising 30 to 50 mass% of 7), 30 to 60 mass% of 8), 1 to 10 mass% of 9) and 0 to 20 mass% of a (meth) acrylate monomer other than 7), 8) and 9) based on 100 mass% of the total of all the (meth)acrylate monomers is more preferred.

The photochromic curable composition may comprise a polyrotaxane. When the photochromic composition comprises the polyrotaxane, a space which can allow for the reversible reaction of the photochromic compound molecule can be secured without fail, thereby making it possible to obtain excellent photochromic properties.

The photochromic curable composition may comprise a compound having a photochromic function as the photochromic compound. For example, photochromic compounds such as fulgide compounds, chromene compounds and spirooxazine compounds are well known all of which may be used in the present invention without restriction. They may be used alone or in combination of two or more. The above fulgide compounds, chromene compounds and spirooxazine compounds include compounds disclosed by JP-A 2-28154, JP-A 62-288830, WO94/22850 and WO96/14596.

Out of the photochromic compounds, at least one chromene compound having an indeno(2,1-f)naphtho(1,2-b)pyran skeleton is preferably used from the viewpoint of photochromic properties such as color optical density, initial coloration, durability and fading speed.

The photochromic curable composition in the present invention may be optionally mixed with, for example, stabilizers and additives such as surfactant, ultraviolet absorbent, infrared absorbent, ultraviolet stabilizer, antioxidant, discoloration inhibitor, antistatic agent, fluorescent dye, dye, pigment and aroma chemical besides the above components.

As the surfactant, any known surfactant such as a silicone surfactant having a silicone chain (polyalkylsiloxane unit) as a hydrophobic group or a fluorine-containing surfactant having a fluorinated carbon chain may be used with no limitation. By adding the surfactant, wettability to the primer or the optical substrate can be improved and the production of an appearance defect can be easily prevented without affecting the photochromic properties and adhesion of the photochromic coat layer when the photochromic curable composition of the present invention is used.

Examples of the silicone surfactant and the fluorine-containing surfactant which may be preferably used in the present invention include the L-7001, L-7002, L-7604 and FZ-2123 of Dow Corning Toray Co. , Ltd., the MEGAFAC F-470, MEGAFAC F-1405 and MEGAFAC F-479 of DIC Corporation, and the FLORAD FC-430 of Sumitomo 3M Limited. The surfactants may be used in combination of two or more.

When the photochromic curable composition is mixed with an ultraviolet stabilizer, the durability of the photochromic compound can be further improved advantageously. As the ultraviolet stabilizer, a hindered amine optical stabilizer, hindered phenol antioxidant or sulfur-based antioxidant may be advantageously used. Preferred examples of the ultraviolet stabilizer include bis(1,2,2,6,6-pentamethyl-4-piperidyl)sebacate, the ADK STAB LA-52, LA-57, LA-62, LA-63, LA-67, LA-77, LA-82, LA-87 of Adeka Corporation, 2,6-di-t-butyl-4-methyl-phenol, 2,6-ethylenebis(oxyethylene)bis[3-(5-t-butyl-4-hydroxy-m -tolyl)propionate] and the IRGANOX 1010, 1035, 1075, 1098, 1135, 1141, 1222, 1330, 1425, 1520, 259, 3114, 3790, 5057 and 565 of Ciba Specialty Chemicals.

### <hard coat layer>

In the photochromic laminate of the present invention, a hard coat layer obtained by curing a coating composition (may also be referred to as "hard coat composition" hereinafter) comprising inorganic oxide fine particles and a hydrolyzable group-containing organic silicon compound may be formed on the photochromic coat layer. As the inorganic oxide fine particles used in the hard coat layer, the above silica sol, or inorganic oxide or composite inorganic oxide fine particles may be used without restriction. The amount of the inorganic oxide fine particles should be determined according to the type of the inorganic oxide, physical properties required for the finally obtained hard coat layer and purpose. In general, the content of the inorganic oxide fine particles in the finally formed hard coat layer should be set to 20 to 80 mass%, specifically 40 to 60 mass% in accordance with the amounts of the other components.

The hydrolyzable group-containing organic silicon compound serves as a binder for the inorganic oxide fine particles and forms a transparent cured body as a matrix in the hard coat layer, and a polymerizable organic silicon compound is used. The organic silicon compound has an alkoxyl group which is a functional group, and the above-described known hydrolyzable group-containing organic silicon compounds may be used without restriction. The organic silicon compounds may be used alone or in combination of two or more. The organic silicon compound may be used in the form of a partial hydrolyzate or a partial condensate of the partial hydrolyzate. In the present invention, from the viewpoints of adhesion to a plastic lens and crosslinkability, γ-glycidoxypropyl trimethoxysilane, γ-glycidoxypropylmethyl dimethoxysilane, tetraethoxysilane, and partial hydrolyzates and partial condensates thereof are preferably used.

It is considered that, in this hard coat composition, the hydrolyzable group-containing organic silicon compound is hydrolyzed and this hydrolyzate is polymerized and cured (polycondensed) while it includes the inorganic oxide fine particles to form a cured body as a matrix, thereby forming a hard coat layer containing the inorganic oxide fine particles dispersed in the matrix closely. Therefore, to form this cured body, water is required to promote the hydrolysis of the hydrolyzable group-containing organic silicon compound.

Water used for this purpose may be added in the form of an acid aqueous solution, for example, an aqueous solution of an inorganic acid such as hydrochloric acid, sulfuric acid, nitric acid or phosphoric acid, or an organic acid such as acetic acid or propionic acid.

The hard coat composition may be mixed with a curing catalyst for promoting the curing of the hydrolyzate of the hydrolyzable group-containing organic silicon compound. As this curing catalyst, a curing catalyst known per se, for example, acetylacetonate complex, perchlorate, organic metal salt or Lewis acid may be used, and they may be used alone or in combination of two or more.

A preferred example of the acetylacetonate complex is aluminum acetylacetonate.

Examples of the perchlorate include magnesium perchlorate, aluminum perchlorate, zinc perchlorate and ammonium perchlorate.

The hard coat composition may also be mixed with an organic solvent. This organic solvent is a solvent for the hydrolyzable group-containing organic silicon compound and a dispersion medium for the inorganic oxide fine particles. Any known organic solvent may be used if it has these functions and volatility. Examples of the organic solvent include alcohols such as methanol, ethanol, propanol, isopropanol, butanol and diacetone alcohol; lower alcohol ester of a lower carboxylic acid such as methyl acetate, ethyl acetate and propyl acetate; ethers such as cellosolve, dioxane and ethylene glycol monoisopropyl ether; ketones such as acetone, methyl ethyl ketone, methyl isobutyl ketone and acetyl acetone; halogenated hydrocarbons such as methylene chloride; and aromatic hydrocarbons such as benzene, toluene and xylene. These organic solvents may be used alone or in combination of two or more.

The hard coat composition for forming a hard coat layer may be produced by mixing together the above components in accordance with a known method. It is preferred that the hydrolyzable group-containing organic silicon compound should be mixed with the other components after it is completely hydrolyzed.

### <constitution of photochromic laminate>

Although the primer coat layer is formed on the top of the optical substrate in the present invention, the photochromic laminate having the hard coat layer may have any one of preferred lamination configurations shown in Figs. 2 to 4.

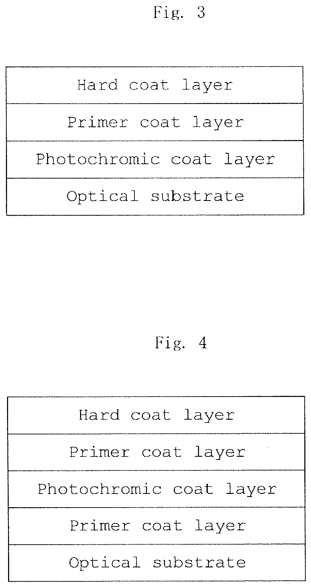

That is, the photochromic laminate is a laminate (Fig. 2) obtained by forming a primer coat 2, a photochromic coat layer 4 and a hard coat layer 3 on an optical substrate in this order, a laminate (Fig. 3) obtained by forming a photochromic coat layer 4, a primer coat layer 2 and a hard coat layer 3 in this order, or a laminate (Fig. 4) obtained by forming a primer coat layer 2, a photochromic coat layer 4, a primer coat layer 2 and a hard coat layer 3 in this order.

By forming the primer coat layer directly on the optical substrate, polymerization shrinkage stress produced in the photopolymerization step at the time of forming the photochromic coat layer is mitigated and stress produced by thermal expansion in the heat treatment step after photopolymerization is easily mitigated, thereby making it easy to prevent cracking. Further, the effect of preventing scratching after hard coating can be expected.

By forming the primer coat layer directly on the photochromic coat layer, stress produced by thermal expansion at the time of hard coating is easily mitigated, whereby cracking is easily prevented and the effect of preventing scratching after hard coating can be expected. Also, the effect of suppressing the deterioration of the photochromic compound contained in the photochromic coat layer can be expected by using a layer having low oxygen permeability as the primer coat layer.

Out of these laminates, a laminate produced by forming the photochromic coat layer directly on the primer coat layer 2 formed on the optical substrate is preferred since it can prevent cracking at the time of forming the photochromic coat layer and has the great effect of improving the yield of the photochromic laminate. A laminate produced by further forming the primer coat layer directly on the photochromic coat layer is particularly preferred.

As for the thickness of the primer coat layer formed on the optical substrate, the thickness of the primer coat layer formed after drying is preferably 0.1 to 20 µm, more preferably 1 to 10 µm, particularly preferably 1 to 8 µm from the viewpoints of excellent optical properties, adhesion between the optical substrate and the primer coat layer and adhesion between the primer coat layer and the photochromic coat layer.

The thickness of the photochromic coat layer formed on the primer coat layer is preferably 10 to 100 µm, more preferably 20 to 50 µm from the viewpoints of excellent optical properties, photochromic properties and adhesion between the primer coat layer and the photochromic coat layer.

### <photochromic laminate production method>

### (photochromic coat layer production method)

The photochromic laminate of the present invention is obtained by further forming a layer of the photochromic curable composition directly on the optical substrate or after the formation of the primer coat layer.

The method of applying the photochromic curable composition of the present invention is not particularly limited, and any known coating technique may be used. Stated more specifically, the composition is applied by spin coating, spray coating, dip coating or dip-spin coating. Out of these coating techniques, spin coating is preferably employed since it is easy to control the film thickness and a coating film having a good appearance is obtained.

When the photochromic curable composition is to be applied by coating, the primer coat layer can be obtained by forming a primer coat layer on the optical substrate by spin coating, placing it in an inert gas such as nitrogen and carrying out UV irradiation. Further, after the photochromic coat layer which will be described hereinafter is formed by coating, the primer coat layer and the photochromic coat layer may be optically cured at the same time. From the viewpoint of adhesion between the primer coat layer and the photochromic coat layer, a method in which, after the primer composition is applied to the optical substrate and dried, the photochromic curable composition is applied to the obtained primer coat layer, placed in an inert gas such as nitrogen and irradiated with UV to optically cure the primer coat layer and the photochromic coat layer at the same time is advantageous.

The thickness of the photochromic coat layer formed on the primer coat layer is preferably 10 to 100 µm, more preferably 20 to 50 µm from the viewpoints of excellent optical properties, photochromic properties and adhesion between the primer coat layer and the photochromic coat layer.

When the photochromic curable composition is to be photopolymerized, UV intensity out of polymerization conditions has an influence upon the properties of the obtained photochromic laminate. Although this illumination condition cannot be limited unconditionally as it is affected by the type and amount of the photopolymerization initiator and the type of the (meth)acrylic monomer, this condition is preferably selected to ensure that 50 to 500 mW/cm² UV light having a wavelength of 365 nm is irradiated for 0.5 to 5 minutes.

After the photochromic coat layer is formed by UV curing, the photochromic laminate of the present invention is preferably heated at 60 to 120°C for 0.5 to 6 hours to enhance adhesion between the optical substrate and the photochromic coat layer or adhesion between the primer coat layer and the photochromic coat layer.

### <method of forming hard coat layer>

The hard coat layer in the present inventio can be formed by applying a hard coat composition to an optical article having the photochromic coat layer or the primer coat layer and drying and curing it. By forming the hard coat layer, a product having excellent scratch resistance can be produced.

The method of applying the hard coat composition to the photochromic coat layer or the primer coat layer is not particularly limited, and dip coating, spin coating or dip-spin coating may be employed. Out of these, dip coating is preferably employed from the viewpoints of productivity and the homogeneity of the coating film.

In the present invention, since the solvent contained in the hard coat composition must be removed in the end, the hard coat composition applied to the primer coat layer by the above method is dried. In the present invention, it is preferred that the hard coat layer should be formed by heating the coating film of the hard coat composition to remove the solvent. The heating temperature at this point is not particularly limited but preferably 90 to 130°C, more preferably 90 to 110°C from the viewpoints of adhesion, scratch resistance and the prevention of the deformation and discoloration of a plastic lens caused by heating. The heating time is not particularly limited but generally 1 to 5 hours, particularly preferably 1 to 3 hours from the viewpoint of productivity.

The thickness of the hard coat layer 3 formed as described above is preferably 1.0 to 4.0 µm. When the thickness of the hard coat layer falls within the above range, a laminate having excellent impact resistance and scratch resistance is obtained.

Since the primer composition of the present invention has the high effect of improving impact resistance, it can be advantageously used in laminates in which a hard coat layer having high hardness is to be formed.

### <other layers>

As a matter of course, the photochromic laminate can be further subjected to an antireflection treatment, antistatic treatment and secondary treatment by depositing a thin film made of a metal oxide such as SiO₂, TiO₂ or ZrO₂, or forming a thin coating film of an organic polymer on the hard coat layer as required.

### EXAMPLES

The following examples and Comparative Examples are provided for the purpose of further illustrating the present invention but are in no way to be taken as limiting.

### (primer composition)

### (A) Polyrotaxane;

RX-1: polyrotaxane having side chains with a hydroxyl group and an average molecular weight of about 600 and a weight average molecular weight of 700,000
RX-2: polyrotaxane having side chains with a hydroxyl group and an average molecular weight of about 500 and a weight average molecular weight of 400,000
RX-3: polyrotaxane having side chains with a hydroxyl group and an average molecular weight of about 500 and a weight average molecular weight of 180,000

In the present invention, the weight average molecular weight of the polyrotaxane was measured by gel permeation chromatography (GPC) under the following conditions. A liquid chromatograph (manufactured by Nihon Waters K. K.) was used as an apparatus for GPC measurement. The Shodex GPC KF-805 (elimination limit molecule quantity: 2,000,000) of Showa Denko K.K. was used as a column. Dimethyl formamide (DMF) was used as a developing solution to measure at a flow rate of 1 ml/min and a temperature of 40°C. Polystyrene was used as a reference standard to obtain the weight average molecular weight by comparative conversion. A differential refractometer was used as a detector.

### <RX-1 preparation method>

### (1-1) Preparation of PEG-COOH;

Linear polyethylene glycol (PEG) having a molecular weight of 35,000 was prepared as a polymer for forming an axial molecule.

10 g of PEG, 100 mg of TEMPO (2,2,6,6-tetramethyl-1-piperidinyloxy radical) and 1 g of sodium bromide were dissolved in 100 mL of water. 5 mL of a commercially available sodium hypochlorate aqueous solution (effective chlorine content of 5 %) was added to this solution and stirred at room temperature for 10 minutes. Thereafter, a maximum of 5 mL of ethanol was added to terminate the reaction. After extraction was made by using 50 mL of methylene chloride, methylene chloride was distilled off, the extract was dissolved in 250 mL of ethanol, and re-precipitation was carried out at -4°C for 12 hours to collect and dry PEG-COOH.

### (1-2) Preparation of polyrotaxane;

3 g of PEG-COOH prepared above and 12 g of α-cyclodextrin (α-CD) were each dissolved in 50 mL of 70°C hot water, and the obtained solutions were fully mixed together by shaking. Then, this mixed solution was reprecipitated at 4°C for 12 hours, and the precipitated inclusion complex was freeze-dried and collected. After 0.13 g of adamantanamine was dissolved in 50 mL of dimethyl formamide (DMF) at room temperature, the above inclusion complex was added to and fully mixed with the resulting solution quickly by shaking. Subsequently, a solution prepared by dissolving 0.38 g of a BOP reagent (benzotriazol1-yl-oxy-tris(dimethylamino)phosphonium hexafluorophosphate) in DMF was further added and fully mixed by shaking. Further, a solution prepared by dissolving 0. 14 mL of diisopropylethylamine in DMF was added and fully mixed by shaking to obtain a slurry reagent. The slurry reagent obtained above was left to stand at 4°C for 12 hours. Thereafter, 50 mL of a DMF/methanol mixed solvent (volume ratio of 1/1) was added to and mixed with the reagent, the obtained mixture was then centrifuged, and the supernatant was thrown away. After the resulting product was washed with the above DMF/methanol mixed solution, it was cleaned by using methanol and centrifuged to obtain a precipitate. After the obtained precipitate was vacuum dried, it was dissolved in 50 mL of DMSO (dimethyl sulfoxide), and the obtained transparent solution was added dropwise to 700 mL of water to precipitate a polyrotaxane. The precipitated polyrotaxane was collected by centrifugation and vacuum dried. Further, the polyrotaxane was dissolved in DMSO to carry out precipitation in water, collection and drying so as to obtain a purified polyrotaxane. The inclusion amount of α-CD was 0.25.

The inclusion amount was calculated by dissolving the polyrotaxane in DMSO-d₆ and measuring with a ¹H-NMR measuring instrument (JNM-LA500 of JEOL Ltd.) in accordance with the following method.

X, Y and X/(Y-X) mean the following.
X: integrated value of proton derived from hydroxyl group of 4 to 6 ppm of cyclodextrin
Y: integrated value of proton derived from methylene chains of 3 to 4 ppm of cyclodextrin and PEG
X/(Y-X): proton ratio of cyclodextrin to PEG

X/(Y-X) when the maximum inclusion amount is 1 theoretically is first calculated and then compared with X/(Y-X) calculated from the analytical value of the actual compound to calculate the inclusion amount.

### (1-3)Introduction of side chains into polyrotaxane;

500 mg of the above purified polyrotaxane was dissolved in 50 mL of a 1 mol/L NaOH aqueous solution, and 3.83 g (66 mmol) of propylene oxide was added to the resulting solution and stirred in an argon atmosphere at room temperature for 12 hours. Then, the above polyrotaxane solution was neutralized to a pH of 7 to 8 by using a 1 mol/L HCl aqueous solution, dialyzed with a dialysis tube and freeze-dried to obtain a hydroxypropylated polyrotaxane.

The modification degree of the OH groups of the cyclic molecule by the hydroxypropyl group was 0.5. A mixed solution was prepared by dissolving 5 g of the obtained hydroxypropylated polyrotaxane in 30 g of ε-caprolactone at 80°C. After this mixed solution was stirred at 110°C for 1 hour while dry nitrogen was blown, 0.16 g of a 50 mass% xylene solution of tin (II) 2-ethylhexanoate was added to this mixed solution and stirred at 130°C for 6 hours. Thereafter, xylene was added to obtain a polycaprolactone-modified polyrotaxane xylene solution having a nonvolatile content of about 35 mass% into which side chains have been introduced.

The polycaprolactone-modified polyrotaxane xylene solution prepared above was added dropwise to hexane, collected and dried to obtain a side chain-modified polyrotaxane RX-1 having OH groups as polymerizable functional groups. When the obtained polyrotaxane RX-1 was identified by ¹H-NMR and GPC, it was confirmed that it was a polyrotaxane having a desired structure.

The physical properties of this polyrotaxane (RX-1) (A) were as follows.
Side chain modification degree: 0.5
Molecular weight of side chain: about 600 on average
Weight average molecular weight Mw of polyrotaxane (GPC): 700,000

### <RX-2 preparation method>

A polyrotaxane (RX-2) (A) was obtained in the same manner as the above RX-1 except that PEG having a molecular weight of 20,000 was used.

The physical properties of this polyrotaxane (RX-2) (A) were as follows.
Inclusion amount of α-CD: 0.25
Side chain modification degree: 0.5
Molecular weight of side chain: about 500 on average
Weight average molecular weight Mw of polyrotaxane (GPC): 400,000

### <RX-3 preparation method>

A polyrotaxane (RX-3) (A) was obtained in the same manner as the above RX-1 except that PEG having a molecular weight of 11,000 was used and the amount of ε-caprolactone used to introduce the side chains was changed to 15.0 g.

The physical properties of this polyrotaxane (RX-3) (A) were as follows.
Inclusion amount of α-CD: 0.25
Side chain modification degree: 0.5
Molecular weight of side chain: about 400 on average
Weight average molecular weight Mw of polyrotaxane (GPC): 180,000

### (B)Resin and/or precursor thereof and (C)solvent

B1: organic solvent-containing moisture-curable polyurethane
   Moisture-curable polyurethane (TR-SC-P of Tokuyama Corporation (isocyanate group content: 1.3 mass%, solid content of 26 mass%) dispersion medium (solvent); ethyl acetate)
B2: water dispersion polyurethane resin
   (NJ-321A dispersion of Tokuyama Corporation, containing carboxyl group, solid content: 35 mass%, dispersion medium (solvent): water)

### (preparation of primer composition)

Preparation of B3; 100 g of B1 (moisture-curable polyurethane TR-SC-P), 0.26 g of polyrotaxane RX-1 and 20 g of toluene were mixed together and stirred at room temperature for 1 hour to obtain a primer composition having a polyrotaxane content of 1 part by mass.

### (photochromic curable composition)

### (meth)acrylic monomer

TMPT; trimethylolpropane trimethacrylate
BPE500; 2,2,-bis[4-(methacryloxy-polyethoxy)phenyl]propane (average chain length of ethylene glycol chains of 10, average molecular weight of 804)
9G; polyethylene glycol dimethacrylate (average chain length of ethylene glycol chains of 9, average molecular weight of 536)
14G; polyethylene glycol dimethacrylate (average chain length of ethylene glycol chains of 14, average molecular weight of 736)
PCA; polycarbonate diacrylate which is a reaction product between a polycarbonate diol obtained by phosgenating hexamethylene glycol (50 mol%) and pentamethylene glycol (50 mol%) and acrylic acid (average molecular weight of about 600)
GMA; glycidyl methacrylate
SC; γ-methacryloxypropyl trimethoxysilane
MA1; silsesquioxane monomer

### (synthesis of MA1)

248 mL of ethanol and 54 g (3.0 mol) of water were added to 248 g (1.0 mol) of 3-trimethoxysilylpropyl methacrylate, and 0.20 g (0.005 mol) of sodium hydroxide was added as a catalyst to carry out a reaction at 30°C for 3 hours. After it was confirmed that the raw materials disappeared, the reaction product was neutralized with diluted hydrochloric acid, and 174 mL of toluene, 174 mL of heptane and 174 g of water were added to remove a water layer. Thereafter, an organic layer was rinsed until the water layer became neutral, and the solvent was concentrated to obtain a silsesquioxane monomer (MA1). It was confirmed by ¹H-NMR that the raw materials were completely consumed. It was also confirmed by ²⁹Si-NMR that the obtained product was a mixture of cage-like, ladder-like and random structures.

When the molecular weight of the silsesquioxane monomer (MA1) was measured by gel permeation chromatography (GPC), the weight average molecular weight was 4,800.

### RM1; polyrotaxane monomer

### (synthesis of RM1)

After 0.01 g of dibutylhydroxy toluene (polymerization inhibitor) was added to 30 g of a xylene solution (35 mass%) of the polyrotaxane (RX-1) (A), 3.8 g of 2-acryloyloxyethyl isocyanate was added dropwise to the resulting solution. The obtained solution was stirred at 40°C for 16 hours to obtain a xylene solution of a polyrotaxane having an acrylic group introduced into the end of the polycaprolactone. This polyrotaxane xylene solution was added dropwise to hexane, collected and dried to obtain the polyrotaxane monomer RM1 having an acrylic group introduced into the side chains as a polymerizable functional group. The physical properties of RM1 were as follows.
Inclusion amount of α-CD: 0.25
Side chain modification degree: 0.5
Molecular weight of side chain: about 600 on average
Weight average molecular weight Mw of polyrotaxane (GPC): 950,000

### Photochromic compound

### PC1:

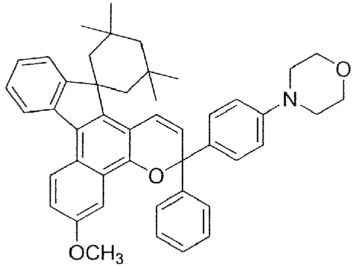

### Ultraviolet stabilizer

HALS: bis(1,2,2,6,6-pentamethyl-4-piperidyl)sebacate (molecular weight of 508, Tinuvin765)
HP: ethylenebis(oxyethylene)bis[3-(5-tert-butyl-4-hydroxy-m-tolyl)propionate] (Irganox245 of Ciba Specialty Chemicals)

### (preparation of photochromic curable composition (H1))

19 parts by mass of TMPT, 15 parts by mass of BPE-500, 10 parts by weight of 9G, 30 parts by mass of 14G, 1 part by weight of GMA, 25 parts by mass of MA1, 4 parts by mass of PC1, 3 parts by mass of HALTS, 3 parts by mass of HP, 0.3 part by mass of Igracure819 as a photopolymerization initiator (manufactured by BASF) and 0.1 part by weight of the L7001 of Dow Corning Toray Co., Ltd. as a leveling agent were added and mixed together under agitation at 70°C for 15 minutes to obtain a photochromic curable composition (H1).

### (preparation of photochromic curable composition (H2))

23 parts by mass of PCA, 40 parts by mass of TMPT, 30 parts by mass of BPE-500, 1 part by mass of GMA, 6 parts by mass of SC, 4 parts by mass of PC1, 3 parts by mass of HALS, 3 parts by mass of HP, 0.3 part of mass of Igracure819 as a photopolymerization initiator and 0.1 part by mass of the L7001 of Dow Corning Toray Co. , Ltd. as a leveling agent were added and mixed together under agitation at 70°C for 15 minutes to obtain a photochromic curable composition (H2).

### (preparation of photochromic curable composition (H3))

18 parts by mass of PCA, 40 parts by mass of TMPT, 30 parts by mass of BPE-500, 1 part by mass of GMA, 6 parts by mass of SC, 5 parts by mass of RM1, 4 parts by mass of PC1, 3 parts by mass of HALS, 3 parts by mass of HP, 0.3 part by mass of Igracure819 as a photopolymerization initiator and 0.1 part by mass of the L7001 of Dow Corning Toray Co. , Ltd. as a leveling agent were added and mixed together under agitation at 70°C for 15 minutes to obtain a photochromic curable composition (H3).

### (preparation of hard coat composition)

12.2 g of t-butanol, 7.0 g of ethylene glycol monobutyl ether, 3.7 g of acetyl acetone, 0.41 g of methyl triethoxysilane, 18.9 g of γ-glycidoxypropyl trimethoxysilane and 0.06 g of a silicone surfactant (L-7001 of Nippon Unicar Co., Ltd.) were mixed together and stirred at room temperature for 30 minutes. 9.0 g of 0.05N hydrochloric acid was further added and stirred for 1 hour.

3.2 g of a methanol solution of 0.1N trimethylammonium chloride was added to the resulting mixture and stirred at room temperature for 1 hour. Then, 44.3 g of a methanol silica sol (solid content of 30 mass%) and 0.51 g of aluminum acetylacetonate were added to the resulting solution and aged for one day to obtain a hard coat composition.

### Example 1

MR-8 (thiourethane resin plastic lens; refractive index of 1.60) having a thickness of 2.0 mm was used as an optical substrate. This optical substrate was fully degreased with acetone, immersed in a 50°C 10 mass% sodium hydroxide aqueous solution for 10 minutes, fully rinsed with hot water and dried at 70°C with a drier for 30 minutes. A primer coat layer and a photochromic coat layer were formed on this plastic lens sequentially by the following method to obtain a lens having the photochromic coat layer.

### (formation of primer coat layer)

The above primer composition (B3) was applied to the obtained lens by using the 1H-DX2 spin coater of MIKASA. This was cured at 110°C in a thermostat for 1 hour. In the present invention, the thickness of the primer coat layer was adjusted to 6.5 to 7.5 µm.

### (formation of photochromic coat layer)

Thereafter, about 2 g of the photochromic curable composition (H1) was spin coated on the surface of the optical substrate having the above primer coat layer. The optical substrate coated with a coating film of the above photochromic curable composition was exposed to light for 90 seconds by using the F3000SQ equipped with a D valve of Fusion UV Systems whose output at 405 nm was adjusted to 200 mW/cm² on the surface of the optical substrate in a nitrogen gas atmosphere to cure the coating film (photopolymerization step). Then, the coating film was heated at 100°C in a thermostat for 1 hour (heat treatment step) to obtain a photochromic laminate. The thickness of the obtained photochromic coat layer can be adjusted by spin coating conditions. In the present invention, the thickness of the photochromic coat layer was adjusted to 40±1 µm.

### (evaluation of photochromic laminate)

An adhesion test was made on the photochromic coat layer of the lens having the photochromic coat layer obtained by the above method. Testing methods, evaluation criteria and evaluation results are given below. The evaluation results are shown in Table 1.

### [specimen evaluation methods]

### 1) Evaluation of appearance

The evaluation of appearance was made by observing 10 photochromic laminates obtained by using 2.0 mm-thick MR-8 as the optical substrate visually and counting the number of laminates having an appearance defect (crack) produced in the photopolymerization step and the subsequent heating step.

### 2) Photochromic properties

The obtained photochromic laminate (thickness of photochromic layer of 500 µm) was used as a specimen and exposed to light having a beam intensity at 365 nm of 2.4 mW/cm² on the surface of the polymer and at 245 nm of 24 µW/cm² with the L-2480 (300W) SHL-100 xenon lamp of Hamamatsu Photonics K.K. through an aero-mass filter (manufactured by Corning Incorporated) at 20°C±1°C for 120 seconds to develop color so as to measure the photochromic properties of the above laminate. The photochromic properties were evaluated by the following methods.
- Maximum absorption wavelength (λmax) : maximum absorption wavelength after color development obtained by the spectrophotometer (instantaneous multi-channel photodetector MCPD1000) of Otsuka Electronics Co. , Ltd. The maximum absorption wavelength is connected with color at the time of color development.
- Color optical density {ε(120) - ε(0)}: difference between absorbance {ε(120)} after 120 seconds of irradiation at the above maximum absorption wavelength and absorbance ε(0) before irradiation. It can be said that as this value becomes larger, photochromic properties become more excellent. Color which was developed outdoors was evaluated visually.
- Fading speed [t1/2(sec.)]: time elapsed until the absorbance at the above maximum wavelength of the specimen drops to 1/2 of {ε(120) - ε(0)} when irradiation is continued for 120 seconds and then stopped. It can be said that as the time becomes shorter, photochromic properties become more excellent.

### 3) adhesion

Adhesion was evaluated by a cross-cut tape test in accordance with JISD-0202. That is, a cutter knife was used to make cuts in the surface of the photochromic layer of the obtained photochromic laminate at intervals of about 1 mm so as to form 100 squares. A cellophane adhesive tape (Cellotape (registered trademark) of Nichiban Co. , Ltd.) was strongly attached to the surface and then peeled off from the surface at a stretch in a 90° direction to count the number of squares left behind of the photochromic layer.

### 4) Vickers hardness

Vickers hardness was measured with the PMT-X7A micro-Vickers hardness meter (of Matsuzawa Co., Ltd.). A square pyramid type diamond indenter was used to carry out the evaluation of Vickers hardness under a load of 10 gf for an indenter retention time of 30 seconds. After this measurement was made 4 times in total, an average value of three measurement data excluding a first one with a large measurement error was given.

### (formation of hard coat layer)

The photochromic laminate obtained by the above method was further subjected to hard coating by the following procedure.

The lens having the photochromic layer was immersed in a 50 °C 10 mass% sodium hydroxide aqueous solution for 10 minutes, fully rinsed with hot water and dried at 70°C with a drier for 30 minutes. This lens was immersed in a hard coat composition and pulled up at a pulling speed of 30 cm/min so as to apply the hard coat composition to the surface of the lens. After the lens was dried at 80°C for 20 minutes, it was cured at 120°C for 4 hours to form a hard coat film. The obtained hard coat film was a colorless and transparent film having a thickness of about 2 µm.

### (evaluation of lens having hard coat layer)

The appearance of the photochromic laminate having the hard coat layer on the photochromic layer obtained by the above method was evaluated by the procedure 1). The evaluation result is shown in Table 1.

### Examples 2 to 3, Comparative Examples 1 to 2

Photochromic laminates were manufactured and evaluated in the same manner as in Example 1 except that compositions shown in Table 1 were used as the primer composition. The results are shown in Table 1.

### Examples 4 and 5

A photochromic laminate (lamination configuration shown in Fig. 3, Example 4) in which a photochromic coat layer 4, a primer layer 2 and a hard coat layer 3 were formed in this order and a photochromic laminate (lamination configuration shown in Fig. 4, Example 5) in which a primer coat layer 2, a photochromic coat layer 4, a primer coat layer 2 and a hard coat layer 3 were formed in this order were manufactured by the methods of forming the primer coat layer, the photochromic coat layer and the hard coat layer described in Example 1 and evaluated. The results are shown in Table 1.

### Examples 6 to 12

Photochromic laminates were manufactured and evaluated in the same manner as in Examples 1 to 5 except that 2. 0 mm-thick CR-39 (allyl resin plastic lens; refractive index of 1.50) was used as the optical substrate, H2 or H3 was used as the photochromic curable composition, and compositions comprising the TR-SC-P moisture-curable polyurethane (B1) which was described in the section "(B) resin and/or precursor thereof" in ratios shown in Table 1 were used as the primer composition. The results are shown in Table 1.

### Examples 13 and 14

Photochromic laminates were manufactured and evaluated in the same manner as in Examples 1 and 5 except that primer compositions comprising the water dispersion polyurethane resin (B2) which was described in the above section "(B) resin and/or precursor thereof" and the polyrotaxane (RX-2) (A) in ratios shown in Table 1 were used and the thickness of the primer layer was adjusted to 4.0 to 4.5 µm. The results are shown in Table 1.

### Comparative Example 3

A photochromic laminate having no primer layer was manufactured for comparison and evaluated. The results are shown in Table 1.

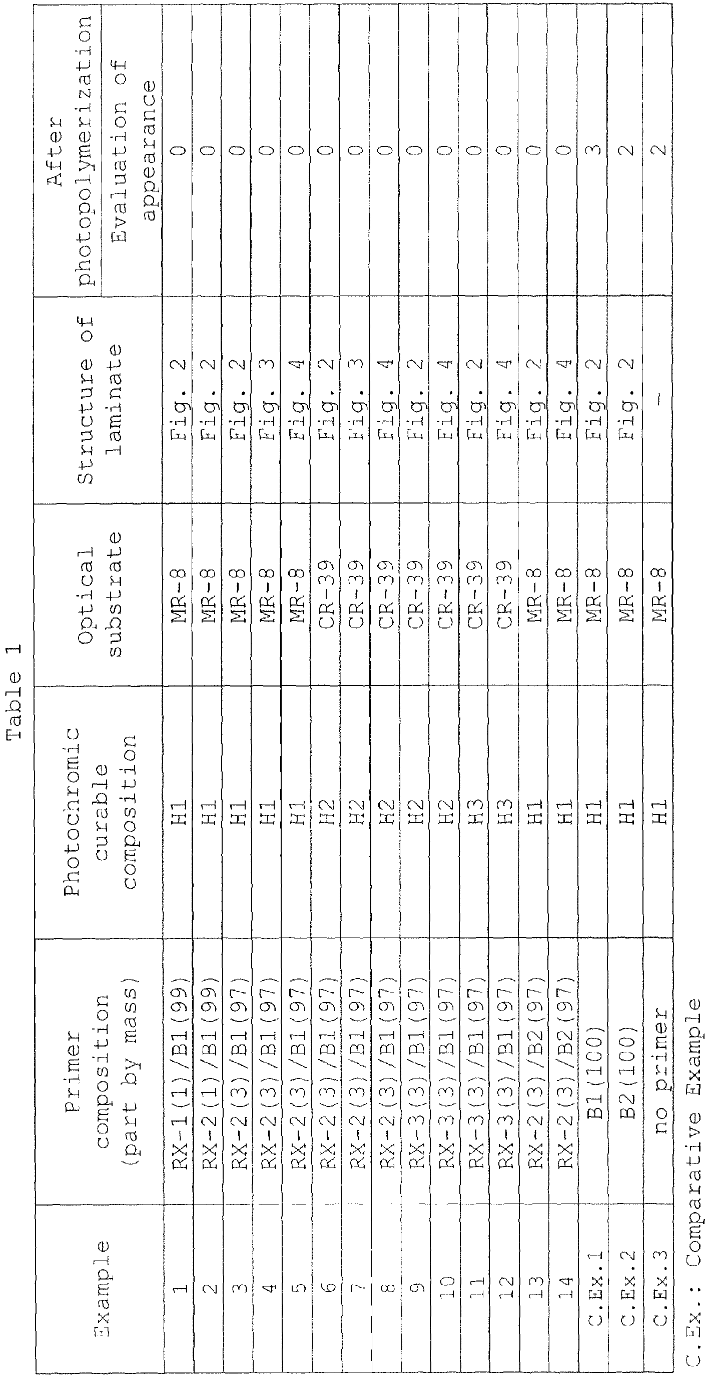

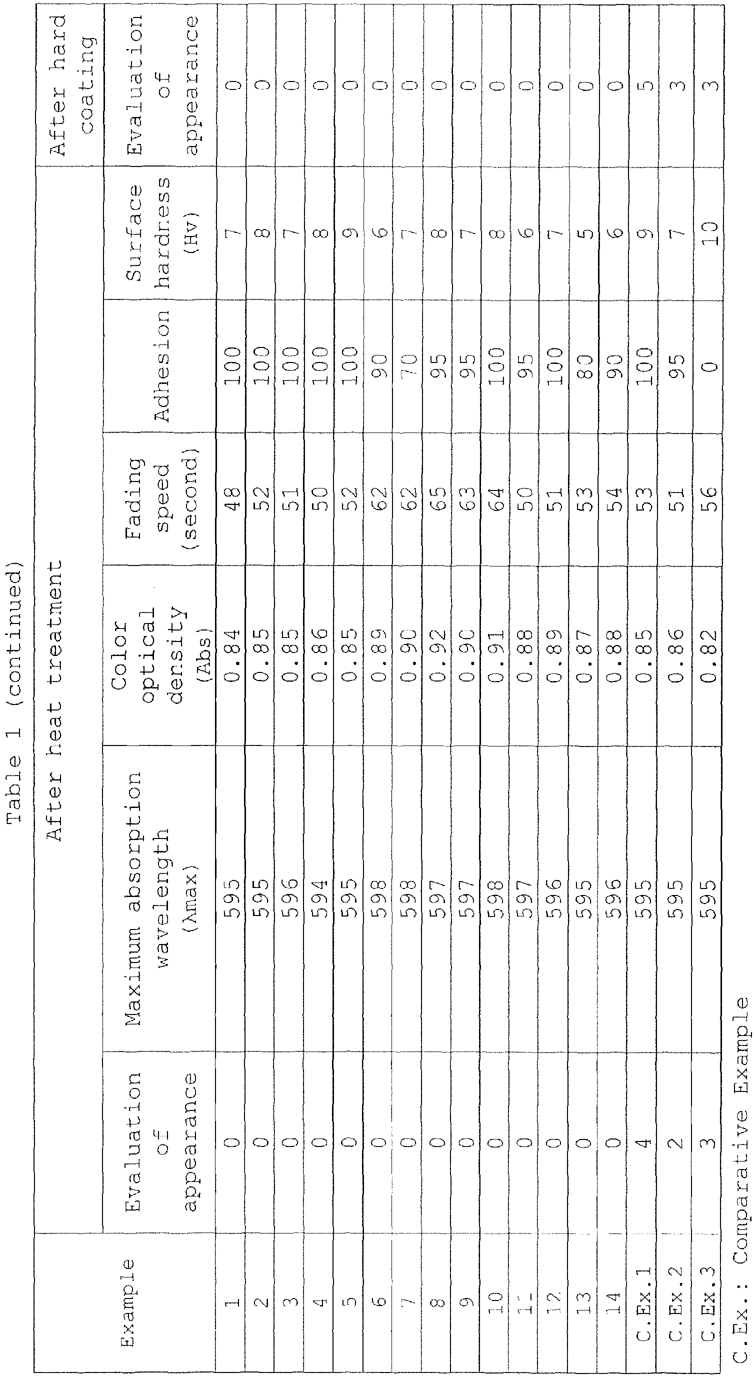

### Effect of Invention

According to the present invention, there can be obtained a photochromic laminate which hardly produces an appearance defect such as a crack in a photochromic coat layer and has such high surface hardness that it is hardly scratched while it retains high photochromic properties.

## Claims

1. A primer composition for optical articles which comprises (A) a polyrotaxane and (B) a resin and/or precursor thereof and substantially no photochromic compound.

2. The primer composition for optical articles according to claim 1, wherein the resin and/or precursor thereof (B) is a polyurethane and/or precursor thereof.

3. The primer composition for optical articles according to claim 1, wherein the cyclic molecules of the polyrotaxane have side chains and at least some of the side chains have a polymerizable functional group.

4. A photochromic laminate having a photochromic coat layer and a hard coat layer formed on an optical substrate in this order, wherein
a primer coat layer which is a cured body of the primer composition for optical articles of claim 1 is formed between the optical substrate and the photochromic coat layer and/or between the photochromic coat layer and the hard coat layer.
